(19) Europäisches Patentamt
European Patent Office
Office européen des brevets

(11) **EP 4 492 901 A1**

(12) **EUROPEAN PATENT APPLICATION**
published in accordance with Art. 153(4) EPC

(43) Date of publication:
**15.01.2025 Bulletin 2025/03**

(21) Application number: **23787662.8**

(22) Date of filing: **11.04.2023**

(51) International Patent Classification (IPC):
*H04W 72/12* (2023.01)

(52) Cooperative Patent Classification (CPC):
**G06N 3/0464; G06N 3/048; G06N 3/082;
H04B 17/309; H04W 24/10; H04W 72/12;
H04W 72/1268; H04W 72/542**

(86) International application number:
**PCT/CN2023/087483**

(87) International publication number:
**WO 2023/198018 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2022 CN 202210388336**

(71) Applicant: **Huawei Technologies Co., Ltd.
Shenzhen, Guangdong 518129 (CN)**

(72) Inventors:
• **CHEN, Hongzhi
Shenzhen, Guangdong 518129 (CN)**
• **CHAI, Xiaomeng
Shenzhen, Guangdong 518129 (CN)**

(74) Representative: **Maiwald GmbH
Engineering
Elisenhof
Elisenstrasse 3
80335 München (DE)**

(54) **UPLINK SIGNAL SENDING METHOD AND APPARATUS, AND UPLINK SIGNAL RECEIVING METHOD AND APPARATUS**

(57) This disclosure relates to an uplink signal sending and receiving method and an apparatus. A terminal device obtains a first manner, where the first manner indicates a first downlink reference signal that is among downlink reference signals received by the terminal device and that is used to obtain first channel environment information, and the first channel environment information is used as an input of a first AI model. The terminal device sends a first uplink signal, where an output of the first AI model is used to send the first uplink signal. Both the terminal device and an access network device can obtain channel environment information in the first manner, so that the channel environment information obtained by the terminal device and the access network device can adapt to each other. Therefore, the access network device can correctly process an uplink signal from the terminal device. In such a manner, the channel environment information or first information does not need to be transmitted between the access network device and the terminal device, thereby reducing transmission overheads.

FIG. 4

**Description**

**CROSS-REFERENCE TO RELATED APPLICATIONS**

This application claims priority to Chinese Patent Application No. 202210388336.4, filed with the China National Intellectual Property Administration on April 13, 2022 and entitled "UPLINK SIGNAL SENDING AND RECEIVING METHOD AND APPARATUS", which is incorporated herein by reference in its entirety.

**TECHNICAL FIELD**

This disclosure relates to the field of communication technologies, and in particular to an uplink signal sending and receiving method and an apparatus.

**BACKGROUND**

Currently, if a terminal device sends an uplink signal to a base station, the uplink signal may be obtained according to a specified rule, and the specified rule is, for example, specified in a protocol, or information delivered by the base station. For example, if the terminal device sends a data signal to the base station, and sends a demodulation reference signal (demodulation reference signal, DMRS) for demodulating the data signal, a pattern of the DMRS is specified in a protocol, or is sent by the base station to the terminal device in advance. The pattern of the DMRS may be used to determine a distribution status (or a distribution manner) of the DMRS in a time-frequency resource or the like.
An uplink signal obtained according to a specified rule has relatively poor adaptability to a scenario. Currently, a solution for processing an uplink signal with relatively strong adaptability to a scenario needs to be provided urgently.

**SUMMARY**

This disclosure provides an uplink signal sending and receiving method and an apparatus to improve adaptability of an uplink signal to a scenario.
According to a first aspect, a first uplink signal sending method is provided. The method may be performed by a terminal device, another device including a function of a terminal device, or a chip system (or a chip) or another functional module. The chip system or the functional module can implement the function of the terminal device. The chip system or the functional module is, for example, disposed in the terminal device. The method includes: obtaining a first manner, where the first manner indicates a first downlink reference signal that is among received downlink reference signals and that is used to obtain first channel environment information, and the first channel environment information is used as an input of a first AI model; and sending a first uplink signal, where an output of the first AI model is used to send the first uplink signal. In this disclosure, the first channel environment information reflects, for example, a current communication environment. The first uplink signal determined based on the first channel environment information is an uplink signal obtained with the current communication environment considered. Therefore, the first uplink signal has relatively strong environment adaptability, thereby helping improve transmission quality and a transmission success rate of the first uplink signal. In addition, the first downlink reference signal used to obtain the first channel environment information is obtained based on the first manner, so that the terminal device can determine how to obtain the first downlink reference signal.
In an optional implementation, the obtaining a first manner includes: receiving information indicating the first manner. For example, if the first manner is configured by an access network device, the access network device may send, to the terminal device, the information indicating the first manner. In this way, the access network device and the terminal device can align an input used to obtain channel environment information, so as to obtain a corresponding parameter to process a transmitted signal.
In an optional implementation, the first manner may alternatively be defined by using a protocol, or may be preconfigured in the terminal device and the access network device. In this way, the access network device and the terminal device can align an input used to obtain channel environment information, so as to obtain a corresponding parameter to process a transmitted signal.
In an optional implementation, the information indicating the first manner indicates one or more of duration, a start time, or an end time of a first time window, and the first manner is all or some downlink reference signals received in the first time window. For example, the first manner is a time window manner, and downlink reference signals that are first reference signals may be determined by specifying a time window. In this way, an input, in the time window, used by the terminal device to obtain the channel environment information may not be limited, and the first AI model of the terminal device can operate more stably.
In an optional implementation, the information indicating the first manner indicates the duration of the first time window, and the end time of the first time window is a time at which the terminal device sends the first uplink signal, or the start time or the end time of the first time window is a time at which the terminal device receives information used to schedule the first uplink signal. The start time or the end time of the first time window may be determined in a plurality of manners. This is not limited. In this way, the first channel environment information can better reflect a channel environment when the first uplink signal is sent.

In an optional implementation, the information indicating the first manner indicates a quantity N of first downlink reference signals, the first manner is the N first downlink reference signals received before a second reference time, and N is a positive integer; or the information indicating the first manner indicates a quantity P of pieces of CSI feedback information for the first downlink reference signal, the first manner is the P pieces of CSI feedback information sent before a second reference time, and P is a positive integer; or the information indicating the first manner indicates a quantity P of second uplink reference signals that use a same spatial filtering parameter or a same spatial filter as the first downlink reference signal, the first manner is the P second uplink reference signals sent before a second reference time, and P is a positive integer. Alternatively, the first manner may be a quantity manner, that is, the first downlink reference signal, the CSI feedback information, or the second uplink reference signal can be determined in the first manner. Regardless of the time window manner or the quantity manner, the determining manner is relatively simple. In this way, a quantity of signals used to obtain the channel environment information is relatively constant. This is more conducive to running of the first AI model.

In an optional implementation, the second reference time is a time at which the terminal device sends the first uplink signal or a time at which the terminal device receives information used to schedule the first uplink signal. The second reference time may be implemented in a plurality of manners. This is not limited. In this way, the first channel environment information can better reflect a channel environment when the first uplink signal is sent.

In an optional implementation, the output of the first AI model includes a first parameter, the first parameter includes one or more of the following: a parameter indicating a distribution status of a first uplink reference signal in a first resource or a parameter indicating a power allocation ratio of the first uplink reference signal in a first resource, the first resource is used to send the first uplink signal, and the first uplink reference signal is used to demodulate the first uplink signal. For example, a modulated data symbol and the first uplink reference signal do not reuse a resource. In this case, the first parameter may indicate a distribution manner of the first uplink reference signal in the first resource. For example, resource units in which the first uplink reference signals are distributed and that are included in the first resource may be determined based on the first parameter. Alternatively, the modulated data symbol and the first uplink reference signal may reuse a resource to improve resource utilization. In this case, the first parameter may indicate the power allocation ratio of the first uplink reference signal in the first resource. A power allocation status of the first uplink reference signal in each resource unit included in the first resource can be determined based on the first parameter, so that resource units in which the first uplink reference signals are distributed and that are included in the first resource can be determined. In this way, a pattern of the first uplink reference signal obtained based on the first channel environment information, that is, the distribution status of the first uplink reference signal in the first resource or the power allocation ratio of the first uplink reference signal in the first resource can better match a current channel environment, so that the first uplink signal can be demodulated more accurately.

In an optional implementation, the first uplink reference signal is a DMRS, and the first uplink signal includes one or more of a control signal or a service signal, and includes the first uplink reference signal. In this way, one or more of a control signal or a service signal can be demodulated more accurately.

In an optional implementation, the output of the first AI model includes a first parameter, the first parameter indicates a first weight value corresponding to at least one encoder model, the at least one encoder model is configured to encode the first uplink signal to obtain a respective corresponding first encoding result, and the first weight value is used to weight the first encoding result output by the at least one encoder model. For example, a terminal device side maintains at least one encoder model, and each encoder model may output corresponding information. If information output by only one encoder model is selected for sending to the access network device, it is equivalent to abandoning information output by another encoder model. In this disclosure, the terminal device may obtain a weight value of at least one encoder model by using the first AI model, to obtain, based on the first weight value and output information of the at least one encoder model, an uplink signal finally sent to the access network device. Because an output of the at least one encoder model is considered, the uplink signal has better space adaptation, so that information recovered by that the access network device is more accurate.

In an optional implementation, the first uplink signal includes a measurement report (or referred to as CSI feedback information) for the first downlink reference signal, and the at least one encoder model is configured to compress the measurement report. For example, the terminal device may send a measurement report to the access network device, and the access network device may determine a precoding matrix and the like based on the measurement report. The encoder model may be configured to compress the measurement report to reduce transmission overheads of the measurement report.

In an optional implementation, the first downlink reference signal is a CSI-RS. Alternatively, the first downlink reference signal may be a synchronization signal physical broadcast channel block (synchronization signal and physical broadcast channel block, SSB) or the like.

In an optional implementation, the first manner further indicates an access network device to determine CSI feedback information that is among channel state information CSI feedback information received by the access network device for the first downlink reference signal and that is used to obtain second channel environment information, the second channel environment information is used as an input of a second artificial intelligence AI model, the CSI feedback information corresponds to all or some first downlink reference signals, and an output of the second AI model is used to receive the first uplink signal. The CSI feedback information of the first downlink reference signal is, for example, a measurement report of the first downlink reference signal. That is, both the terminal device and the access network device can obtain the channel environment information based on the first manner, so that the channel environment information obtained by the terminal device and the access network device can adapt to each other. Therefore, the access network device can correctly process the first uplink signal from the terminal device. In such a manner, the channel environment information does not need to be transmitted between the access network device and the terminal device, thereby reducing transmission overheads.

In an optional implementation, the first manner further indicates an access network device to determine a second uplink reference signal that is among uplink reference signals received by the access network device and that is used to obtain second channel environment information, the second channel environment information is used as an input of a second artificial intelligence AI model, the second uplink reference signal is sent and all or some first downlink reference signals are received by using spatial filters with a same spatial filtering parameter or a same spatial filter, and an output of the second AI model is used to receive the first uplink signal. Information used by the access network device to obtain second environment information, for example, includes the CSI feedback information corresponding to the first downlink reference signal, or includes the second uplink reference signal corresponding to the first downlink reference signal. Once determining, based on the first manner, the first downlink reference signal or the second uplink reference signal corresponding to the first downlink reference signal, the access network device can determine the information used to obtain the second environment information. Both the terminal device and the access network device can obtain the channel environment information based on the first manner, so that the channel environment information obtained by the terminal device and the access network device can adapt to each other. Therefore, the access network device can correctly process the first uplink signal from the terminal device. In such a manner, the channel environment information does not need to be transmitted between the access network device and the terminal device, thereby reducing transmission overheads.

In an optional implementation, a function of the output of the second AI model is the same as a function of the output of the first AI model, or the second AI model outputs a result obtained after processing of the first uplink signal, and a function of a second parameter used for the processing is the same as a function of the output of the first AI model. For example, the second AI model may output the second parameter, and may process the first uplink signal based on the second parameter. In this way, the second AI model has a relatively good correspondence with the first AI model, and a model training process can be simplified. Alternatively, the second AI model may output a result obtained after processing of the first uplink signal. In other words, the access network device does not need to process the first uplink signal based on output information of the second AI model; instead, the second AI model outputs a processing result of the first uplink signal, thereby simplifying a processing process of the access network device.

In an optional implementation, the first channel environment information includes one or more of information about a downlink channel, change information of a downlink channel in time domain and/or frequency domain, or receive power information of the first downlink reference signal. The first channel environment information may represent a downlink channel. Content included in the first channel environment information is not limited.

In an optional implementation, the method further includes: receiving the first downlink reference signal, and obtaining the first channel environment information based on the first downlink reference signal. The obtaining the first channel environment information based on the first downlink reference signal includes: extracting the first channel environment information from the first downlink reference signal; or measuring the first downlink reference signal to generate a first measurement report (or referred to as first CSI feedback information), and extracting the first channel environment information from the first measurement report. The terminal device may extract the first channel environment information in different manners. For example, the first channel environment information may be extracted from a downlink reference signal. The first channel environment information can be obtained without a process of generating a measurement report. Therefore, efficiency is higher. Alternatively, the first channel environment information may be extracted from a measurement report. Because the access network device can also obtain the channel environment information by using the measurement report reported by the terminal device, such a manner can enable the channel environment information obtained by the terminal device and the access network device to match better.

In an optional implementation, the obtaining the first channel environment information based on the first downlink reference signal further includes: obtaining a plurality of pieces of sub information based on the first downlink reference signal, where each piece of sub information is channel environment information; and obtaining the first channel environment information based on the plurality of pieces of sub information, where the first channel environment information is a function of the plurality of pieces of sub information. If the terminal device obtains a plurality of pieces of sub information, the first channel environment information may be obtained based on the plurality of pieces of sub information. That is, regardless of a quantity of pieces of sub information obtained by the terminal device, the terminal device can obtain the first channel environment information based on the sub information.

In an optional implementation, that the first channel environment information is a function of the plurality of pieces of sub information includes: the first channel environment information is a result obtained by splicing the plurality of pieces of sub information, the first channel environment information is a result obtained by performing weighted combination processing on the plurality of pieces of sub information, or the first channel environment information is a result obtained by performing averaging processing on the plurality of pieces of sub information. If the terminal device obtains a plurality of pieces of sub information, the first channel environment information may be obtained based on the plurality of pieces of sub information in a plurality of manners. For example, one manner is splicing. This manner can reserve original content of sub information, so that the first channel environment information can represent a downlink channel more carefully. Alternatively, manners such as averaging and weighted combination may be used. These manners can reduce an information amount of the first channel environment information, thereby simplifying a processing process.

According to a second aspect, a first uplink signal receiving method is provided. The method may be performed by an access network device, another device including a function of an access network device, or a chip system (or a chip) or another functional module. The chip system or the functional module can implement the function of the access network device. The chip system or the functional module is, for example, disposed in the access network device. Optionally, the access network device is, for example, a base station. The method includes: obtaining a first manner, where the first manner indicates second information that is among received information and that is used to obtain second channel environment information, and the second channel environment information is used as an input of a second artificial intelligence AI model; receiving a first uplink signal; and obtaining recovery information of the first uplink signal based on an output of the second AI model.

In an optional implementation, the second information that is among the received information and that is used to obtain the second channel environment information includes: second CSI feedback information that is among received CSI feedback information for a downlink reference signal and that is used to obtain the second channel environment information, where the second CSI feedback information corresponds to all or some first downlink reference signals; or a second uplink reference signal that is among received uplink reference signals and that is used to obtain the second channel environment information, where the access network device indicates a terminal device to use spatial filters with a same spatial filtering parameter or a same spatial filter for the second uplink reference signal and all or some first downlink reference signals.

In an optional implementation, the method further includes: determining information indicating the first manner, where the information indicating the first manner indicates one or more of duration, a start time, or an end time of a first time window, and the first manner is the second information corresponding to the first downlink reference signal sent in the first time window.

In an optional implementation, the information indicating the first manner indicates the duration of the first time window, and the end time of the first time window is a time at which the access network device receives the first uplink signal, or the start time or the end time of the first time window is a time at which the access network device sends information used to schedule the first uplink signal.

In an optional implementation, the method further includes: determining information indicating the first manner, where the information indicating the first manner indicates a quantity N of sent first downlink reference signals, the first manner is M pieces of second information corresponding to the N first downlink reference signals sent before a second reference time, N and M are positive integers, and M is less than or equal to N. The second information is the second CSI feedback information or the second uplink reference signal.

In an optional implementation, the method further includes: determining information indicating the first manner, where the information indicating the first manner indicates a quantity P of pieces of received second information, the first manner is the P pieces of second information received before a second reference time, P is a positive integer, and the second information is the second CSI feedback information or the second uplink reference signal.

In an optional implementation, the second reference time is a sending time of the first uplink signal or a sending time of information used to schedule the first uplink signal.

In an optional implementation, the obtaining recovery information of the first uplink signal based on an output of the second AI model includes: when the output of the second AI model includes a second parameter, the second parameter includes one or more of the following: a parameter indicating a distribution status of a first uplink reference signal in a first resource or a parameter indicating a power allocation ratio of the first uplink reference signal in a first resource, the first resource is used to receive the first uplink signal, and the first uplink reference signal is used to demodulate the first uplink signal, obtaining the recovery information of the first uplink signal based on the second parameter; or the output of the second AI model includes the recovery information of the first uplink signal, the second AI model processes the first uplink signal based on a second parameter, the second parameter includes one or more of the following: a parameter indicating a distribution status of a first uplink reference signal in a first resource or a parameter indicating a power allocation ratio of the first uplink reference signal in a first resource, the first resource is used to receive the first uplink signal, and the first uplink reference signal is used to demodulate the first uplink signal.

In an optional implementation, the first uplink reference signal is a DMRS, and the first uplink signal includes one or more of a control signal or a service signal, and includes the first uplink reference signal.

In an optional implementation, the obtaining recovery information of the first uplink signal based on an output of the second AI model includes: when the output of the second AI model includes a second parameter, the second parameter indicates a second weight value corresponding to at least one decoder model, and the at least one decoder model is configured to decode the first uplink signal to obtain a respective corresponding second decoding result, obtaining the recovery information of the first uplink signal based on the second parameter and the second decoding result; or when the output of the second AI model includes at least one processing bit, obtaining the recovery information of the first uplink signal based on the at least one processing bit and at least one decoder model, where the second AI model processes the first uplink signal based on a second parameter, the second parameter indicates a second weight value corresponding to the at least one decoder model, and the at least one decoder model is configured to decode the at least one processing bit to obtain a respective corresponding second decoding result.

In an optional implementation, the first uplink signal includes a measurement report for the first downlink reference signal, and the at least one decoder model is configured to decompress the measurement report.

In an optional implementation, the second information is related to the first downlink reference signal, the first manner further indicates the first downlink reference signal that is among sent downlink reference signals and that is used to obtain first channel environment information, the first channel environment information is used as an input of a first AI model of the terminal device, and an output of the first AI model is used to send the first uplink signal.

In an optional implementation, a function of the output of the first AI model or a first parameter that is applied to the first AI model and that is used to process the to-be-sent first uplink signal is the same as a function of the output of the second AI model; or a function of the output of the first AI model or a first parameter that is applied to the first AI model and that is used to process the to-be-sent first uplink signal is the same as a function of the second parameter that is applied to the second AI model and that is used to process the received first uplink signal.

In an optional implementation, the method further includes: sending the information indicating the first manner.

In an optional implementation, the first manner is preset.

In an optional implementation, the first downlink reference signal is one or more of a CSI-RS or an SSB.

In an optional implementation, the second channel environment information includes one or more of information about a downlink channel, change information of a downlink channel in time domain and/or frequency domain, or receive power information of the first downlink reference signal.

In an optional implementation, the method further includes: sending the first downlink reference signal; and obtaining the second information from received information based on the first manner, and obtaining the second channel environment information based on the second information, where the second information is second CSI feedback information, and the second CSI feedback information corresponds to all or some first downlink reference signals, or the second information is the second uplink reference signal, and the access network device indicates the terminal device to use spatial filters with a same spatial filtering parameter or a same spatial filter for the second uplink reference signal and all or some first downlink reference signals.

In an optional implementation, the obtaining the second channel environment information based on the second information includes: obtaining a plurality of pieces of sub information based on the second information, where each piece of sub information is channel environment information; and obtaining the second channel environment information based on the plurality of pieces of sub information, where the second channel environment information is a function of the plurality of pieces of sub information.

In an optional implementation, that the second channel environment information is a function of the plurality of pieces of sub information includes: the second channel environment information is a result obtained by splicing the plurality of pieces of sub information, the second channel environment information is a result obtained by performing weighted combination processing on the plurality of pieces of sub information, or the second channel environment information is a result obtained by performing averaging processing on the plurality of pieces of sub information.

For technical effects brought by the second aspect or the optional implementations, refer to the descriptions of the technical effects of the first aspect or the corresponding implementations.

According to a third aspect, a second uplink signal sending method is provided. The method may be performed by a terminal device, another device including a function of a terminal device, or a chip system (or a chip) or another functional module. The chip system or the functional module can implement the function of the terminal device. The chip system or the functional module is, for example, disposed in the terminal device. The method includes: obtaining first channel environment information based on a first downlink reference signal, where the first downlink reference signal is obtained based on a first manner, and the first manner is used by the terminal device and an access network device to obtain channel environment information; inputting the first channel environment information into a first AI model to obtain first information; and sending a first uplink signal to the access network device based on the first information.

In this disclosure, the terminal device may obtain the first channel environment information, and obtain the first information based on the first channel environment information, and the first information may be used for to-be-sent uplink information to obtain the first uplink signal. The first channel environment information reflects, for example, a current communication environment. The first uplink signal obtained based on the first channel environment information is an uplink signal obtained with the current communication environment considered. Therefore, the first uplink signal has relatively strong environment adaptability, thereby helping improve transmission quality and a transmission success rate of the first uplink signal. In addition, a downlink reference signal used to obtain the first channel environment information is obtained based on the first manner. Both the terminal device and an access network device can obtain channel environment information in the first manner, so that the channel environment information obtained by the terminal device and the access network device can adapt to each other. Therefore, the access network device can correctly process the first uplink signal from the terminal device. In such a manner, the channel environment information or first information does not need to be transmitted between the access network device and the terminal device, thereby reducing transmission overheads.

In an optional implementation, the first channel environment information includes information about a downlink channel, change information of a downlink channel in time domain and/or frequency domain, or receive power information of the first downlink reference signal. The first channel environment information may represent a downlink channel. Content included in the first channel environment information is not limited.

In an optional implementation, the obtaining the first channel environment information based on the first downlink reference signal includes: receiving the first downlink reference signal; and extracting the first channel environment information from the first downlink reference signal; or measuring the first downlink reference signal to generate a measurement report, and extracting the first channel environment information from the measurement report. The terminal device may extract the first channel environment information in different manners. For example, the first channel environment information may be extracted from the first downlink reference signal. The first channel environment information can be obtained without a process of generating a measurement report. Therefore, efficiency is higher. Alternatively, the first channel environment information may be extracted from a measurement report. Because the access network device can also obtain the channel environment information by using the measurement report reported by the terminal device, such a manner can enable the channel environment information obtained by the terminal device and the access network device to match better.

In an optional implementation, the obtaining the first channel environment information based on the first downlink reference signal includes: receiving the first downlink reference signal; obtaining a plurality of pieces of sub information based on the first downlink reference signal, where each piece of sub information is channel environment information; and splicing the plurality of pieces of sub information to obtain the first channel environment information, performing weighted combination processing on the plurality of pieces of sub information to obtain the first channel environment information, or performing averaging processing on the plurality of pieces of sub information to obtain the first channel environment information. If the terminal device obtains a plurality of pieces of sub information, the first channel environment information may be obtained based on the plurality of pieces of sub information in a plurality of manners. For example, one manner is splicing. This manner can reserve original content of sub information, so that the first channel environment information can represent a downlink channel more carefully. Alternatively, manners such as averaging and weighted combination may be used. These manners can reduce an information amount of the first channel environment information, thereby simplifying a processing process.

In an optional implementation, the first downlink reference signal includes all or some downlink reference signals received in a first time window specified in the first manner, a reference time of the first time window is a time at which the terminal device sends the first uplink signal or a time at which the terminal device receives information used to schedule the first uplink signal, and the reference time of the first time window is a start time or an end time of the first time window.

In an optional implementation, the first downlink reference signal includes N downlink reference signals received before a reference time specified in the first manner; or the first downlink reference signal includes N downlink reference signals corresponding to M measurement reports sent before a reference time specified in the first manner. The reference time is a time at which the terminal device sends the first uplink signal or a time at which the terminal device receives information used to schedule the first uplink signal, N and M are positive integers, and M is less than or equal to N.

The first manner may be configured by the access network device, may be predefined by using a protocol, or so on. Both the access network device and UE may obtain the channel environment information in the first manner. In this way, the first channel environment information obtained by the UE can match second channel environment information obtained by the access network device. For example, a first manner is that both the terminal device and the access network device obtain channel environment information based on some or all downlink reference signals in the first time window. For another example, another first manner is that both the terminal device and the access network device obtain channel environment information based on N downlink reference signals (or downlink reference signals corresponding to N measurement reports) before a reference time. In addition, the first manner may be another manner, provided that the terminal device and the access network device obtain the channel environment information based on a same first manner.

In an optional implementation, the method further includes: receiving information about the first AI model. The first AI model may be obtained through training by the access network device or by a third-party device. If the first AI model is obtained through training by the third-party device, the third-party device may send the information about the first AI model to the access network device, and the access network device may send the information about the first AI model to the UE for use.

In an optional implementation, the first information includes a first parameter, the first parameter is used to send the first uplink signal, and the first uplink signal includes one or more of a control signal or a service signal, and includes a first uplink reference signal. The first parameter output by the first AI model is used by the UE to obtain the first uplink reference signal. The UE determines the first uplink signal based on the first uplink reference signal. The access network device may demodulate the received first uplink signal based on the first uplink reference signal.

In an optional implementation, the first parameter indicates a distribution status of the first uplink reference signal in a first resource, or the first parameter indicates a power allocation ratio of the first uplink reference signal in a first resource. The first resource is a resource used to transmit the first uplink signal. For example, a modulated data symbol and the first uplink reference signal do not reuse a resource. In this case, the first parameter may indicate a distribution manner of the first uplink reference signal in the first resource. For example, resource units in which the first uplink reference signals are distributed and that are included in the first resource may be determined based on the first parameter. Alternatively, the modulated data symbol and the first uplink reference signal may reuse a resource to improve resource utilization. In this case, the first parameter may indicate the power allocation ratio of the first uplink reference signal in the first resource. A power allocation status of the first uplink reference signal in each resource unit included in the first resource can be determined based on the first parameter, so that resource units in which the first uplink reference signals are distributed and that are included in the first resource can be determined.

In an optional implementation, the first uplink reference signal is a DMRS. Alternatively, the first uplink reference signal may be another reference signal used for data demodulation. This is not limited.

In an optional implementation, the first information includes a first parameter, the first parameter indicates a first weight value corresponding to at least one encoder model, and the first uplink signal includes one or more of a control signal or a service signal. For example, a terminal device side maintains at least one encoder model, and each encoder model may output corresponding information. If information output by only one encoder model is selected for sending to the access network device, it is equivalent to abandoning information output by another encoder model. In this disclosure, the terminal device may obtain a weight value of at least one encoder model by using the first AI model, to obtain, based on the first weight value and output information of the at least one encoder model, the first uplink signal finally sent to the access network device. Because an output of the at least one encoder model is considered, the first uplink signal has better space adaptation, so that information recovered by that the access network device is more accurate.

In an optional implementation, the first uplink signal is CSI or PMI, or the first uplink signal is neither CSI nor PMI, but the first uplink signal may have a function similar to that of the CSI or the PMI.

In an optional implementation, the method further includes: receiving information about the at least one encoder model. The at least one encoder model may be obtained through training by the access network device or by a third-party device. If the at least one encoder model is obtained through training by the third-party device, the third-party device may send the information about the at least one encoder model to the access network device, and the access network device may send the information about the at least one encoder model to the UE for use.

According to a fourth aspect, a second uplink signal receiving method is provided. The method may be performed by an access network device, another device including a function of an access network device, or a chip system (or a chip) or another functional module. The chip system or the functional module can implement the function of the access network device. The chip system or the functional module is, for example, disposed in the access network device. Optionally, the access network device is, for example, a base station. The method includes: obtaining second channel environment information based on second information, and receiving a first uplink signal from a terminal device, where the second information is obtained based on a first manner, and the first manner is used by the terminal device and the access network device to obtain channel environment information; and obtaining recovery information of the first uplink signal based on the second channel environment information and the first uplink signal.

In an optional implementation, the second channel environment information includes information about a downlink channel, change information of a downlink channel in time domain and/or frequency domain, or receive power information of a first downlink reference signal.

In an optional implementation, the obtaining second channel environment information based on second information includes: receiving a measurement report of the first downlink reference signal; and extracting the second channel environment information from the measurement report.

In an optional implementation, the obtaining second channel environment information based on second information includes: receiving a second uplink reference signal; and if the second uplink reference signal and the first downlink reference signal use spatial filters with a same spatial filtering parameter or a same spatial filter, obtaining the second channel environment information based on the second uplink reference signal. The access network device may extract the second channel environment information from the measurement report, or the access network device may extract the second channel environment information from the second uplink reference signal from the terminal device. Because the second uplink reference signal and the first downlink reference signal use the same spatial filter, the second channel environment information obtained by the access network device can match the first channel environment information obtained by the terminal device. It can be learned that a manner in which the access network device obtains the second channel environment information is relatively flexible.

In an optional implementation, the second uplink reference signal is an SRS. Alternatively, the second uplink reference signal may be another reference signal sent by the terminal device to the access network device.

In an optional implementation, the first downlink reference signal includes all or some downlink reference signals sent in a first time window specified in the first manner, a reference time of the first time window is a time at which the access network device receives the measurement report of the first downlink reference signal or a time at which the access network device sends information used to schedule the first uplink signal, and the reference time of the first time window is a start time or an end time of the first time window.

In an optional implementation, the first downlink reference signal includes N downlink reference signals sent before a reference time specified in the first manner; or the first downlink reference signal includes N downlink reference signals corresponding to M measurement reports received before a reference time specified in the first manner; or the first downlink reference signal includes downlink reference signals corresponding to P second uplink reference signals received before a reference time specified in the first manner. The reference time is a time at which the access network device receives the first uplink signal or a time at which the access network device sends information used to schedule the first uplink signal, N, M, and P are positive integers, and M is less than or equal to N.

In an optional implementation, the obtaining recovery information of the first uplink signal based on the second channel environment information and the first uplink signal includes: inputting the second channel environment information and information about the first uplink signal into a second AI model to obtain the recovery information of the first uplink signal; or inputting the second channel environment information into a second AI model to obtain a second parameter, and recovering the first uplink signal based on the second parameter to obtain the recovery information of the first uplink signal. The second AI model may recover the first uplink signal based on the second parameter to some extent, to reduce a processing process of the access network device and simplify implementation of the access network device. Alternatively, the second AI model may output the second parameter. Then, the access network device recovers the first uplink signal based on the second parameter to obtain the recovery information of the first uplink signal. In this manner, input and output information of the first AI model and the second AI model can match better.

In an optional implementation, the first uplink signal includes one or more of a control signal or a service signal, and includes a first uplink reference signal.

In an optional implementation, the second parameter indicates a distribution status of the first uplink reference signal in a first resource, or the second parameter indicates a power allocation ratio of the first uplink reference signal in a first resource. The first resource is a resource used to transmit the first uplink signal.

In an optional implementation, the first uplink reference signal is a DMRS.

In an optional implementation, the first uplink signal is obtained based on a first weight value corresponding to at least one encoder model and output information of the at least one encoder model.

In an optional implementation, the recovering the first uplink signal based on the second parameter to obtain the recovery information of the first uplink signal includes: processing the first uplink signal based on the second parameter to obtain at least one processing bit; and inputting the at least one processing bit into at least one decoder model to obtain the recovery information of the first uplink signal, where the at least one decoder model corresponds to the at least one encoder model.

In an optional implementation, the second parameter indicates a second weight value corresponding to the at least one encoder model.

In an optional implementation, the method further includes: sending information about the at least one encoder model to the terminal device.

In an optional implementation, the uplink signal is CSI.

In an optional implementation, the method further includes: sending information about a first AI model to the terminal device, where the first AI model corresponds to the second AI model.

In an optional implementation, the method further includes: receiving the information about the first AI model and information about the second AI model, where the first AI model corresponds to the second AI model; or obtaining the corresponding first AI model and the second AI model through joint training. The first AI model and the second AI model may be obtained through training by a third-party device (for example, an AI network element). The third-party device may send the information about the first AI model and the information about the second AI model to the access network device, and the access network device does not need to perform training autonomously, thereby simplifying implementation of the access network device. Alternatively, the access network device may obtain the first AI model and the second AI model through autonomous training, so that signaling overheads caused by transmitting model information can be saved.

For technical effects brought by the fourth aspect or the optional implementations, refer to the descriptions of the technical effects of the first aspect, the third aspect, or the corresponding implementations.

According to a fifth aspect, a communication apparatus is provided. The communication apparatus may be the terminal device according to any one of the first aspect to the fourth aspect. The communication apparatus has a function of the foregoing terminal device. The communication apparatus is, for example, a mobile terminal device or a functional module in the terminal device, for example, a baseband apparatus or a chip system (or a chip). In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing a sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function; or the sending unit and the receiving unit may be different functional modules, and the transceiver unit is a general term for these functional modules.

For example, the processing unit is configured to obtain a first manner, where the first manner indicates a first downlink reference signal that is among received downlink reference signals and that is used to obtain first channel environment information, and the first channel environment information is used as an input of a first artificial intelligence AI model; and the transceiver unit (or the sending unit) is configured to send a first uplink signal, where an output of the first AI model is used to send the first uplink signal.

For another example, the processing unit is configured to obtain first channel environment information based on a first downlink reference signal, where the first downlink reference signal is obtained based on a first manner, and the first manner is used by the communication apparatus and an access network device to obtain channel environment information; the processing unit is further configured to input the first channel environment information into a first AI model to obtain first information; and the processing unit is further configured to send a first uplink signal to the access network device through the transceiver unit based on the first information.

In an optional implementation, the communication apparatus further includes a storage unit (sometimes also referred to as a storage module). The processing unit is configured to: be coupled to the storage unit, and execute a program or instructions in the storage unit, so that the communication apparatus is enabled to perform a function of the terminal device according to any one of the first aspect to the fourth aspect.

According to a sixth aspect, a communication apparatus is provided. The communication apparatus may be the access network device according to any one of the first aspect to the fourth aspect. The communication apparatus has a function of the foregoing access network device. The communication apparatus is, for example, the access network device or a functional module in the access network device, for example, a baseband apparatus or a chip system (or a chip). In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fifth aspect.

For example, the processing unit is configured to obtain a first manner, where the first manner indicates information that is among received information and that is used to obtain second channel environment information, and the second channel environment information is used as an input of a second AI model; the transceiver unit (or the receiving unit) is configured to receive a first uplink signal, where the second AI model is used to receive the first uplink signal; and the processing unit is further configured to obtain recovery information of the first uplink signal based on an output of the second AI model.

For another example, the processing unit is configured to obtain second channel environment information based on second information; the transceiver unit is configured to receive a first uplink signal from a terminal device, where the second information is obtained based on a first manner, the first manner is used by the terminal device and the communication apparatus to obtain channel environment information; and the processing unit is further configured to obtain recovery information of the first uplink signal based on the second channel environment information and the first uplink signal.

In an optional implementation, the communication apparatus further includes a storage unit (sometimes also referred to as a storage module). The processing unit is configured to: be coupled to the storage unit, and execute a program or instructions in the storage unit, so that the communication apparatus is enabled to perform a function of the access network device according to any one of the first aspect to the fourth aspect.

According to a seventh aspect, a communication system is provided, including the communication apparatus according to the fifth aspect and the communication apparatus according to the sixth aspect.

According to an eighth aspect, a computer-readable storage medium is provided. The computer-readable storage medium is configured to store a computer program or instructions. When the computer program or instructions are run, the method performed by the terminal device or the access network device according to any one of the foregoing aspects is implemented.

According to a ninth aspect, a computer program product including instructions is provided. When the computer program product is run on a computer, the method according to any one of the foregoing aspects is implemented.

According to a tenth aspect, a chip system or a chip is provided, including a processor and an interface. The processor is configured to invoke instructions from the interface and run the instructions, so that the chip system is enabled to implement the method according to any one of the foregoing aspects.

**BRIEF DESCRIPTION OF DRAWINGS**

FIG. 1 is a diagram of a communication system;
FIG. 2 is a diagram of an architecture of a communication network in a communication system;
FIG. 3A to FIG. 3E are diagrams of several application frameworks of AI in a communication system;
FIG. 4 is a flowchart of an uplink signal sending and receiving method according to this disclosure;
FIG. 5A is a diagram of a structure of a first AI model according to this disclosure;
FIG. 5B is a diagram of a structure of a second AI model according to this disclosure;
FIG. 5C is a diagram of a structure of a residual module according to this disclosure;
FIG. 6 is a diagram of distribution of first uplink reference signals according to this disclosure;
FIG. 7 is a diagram of channel environment information respectively obtained by an access network device and UE according to this disclosure;
FIG. 8 is a diagram of sending an uplink signal by using a method provided in this disclosure;
FIG. 9 is a flowchart of another uplink signal sending and receiving method according to this disclosure;
FIG. 10 is a diagram of sending an uplink signal by using a method provided in this disclosure;
FIG. 11 is a diagram of an apparatus according to this disclosure; and
FIG. 12 is a diagram of another apparatus according to this disclosure.

**DESCRIPTION OF EMBODIMENTS**

To make the objectives, technical solutions, and advantages of this disclosure clearer, the following further describes this disclosure in detail with reference to the accompanying drawings.

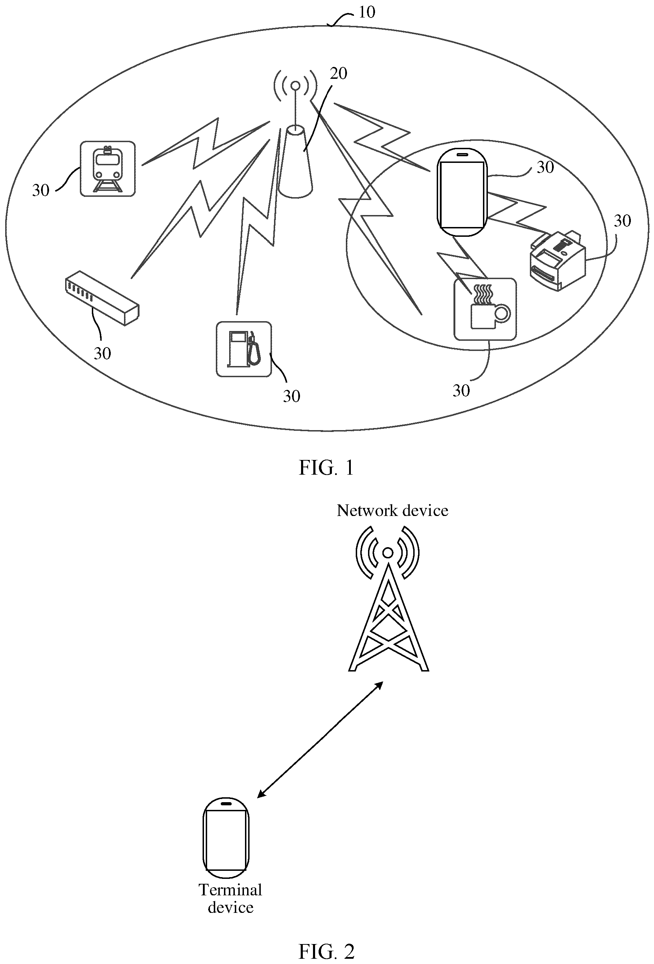

The technology provided in this disclosure may be applied to a communication system 10 shown in FIG. 1. The communication system 10 includes one or more communication apparatuses 30 (for example, terminal devices). The one or more communication apparatuses 30 are connected to one or more core network (core network, CN) devices by using one or more access network (radio access network, RAN) devices 20, to implement communication between a plurality of communication devices. For example, the communication system 10 is a communication system that supports a 4th generation (the 4th generation, 4G) (including long term evolution (long term evolution, LTE)) access technology, a communication system that supports a 5G (sometimes also referred to as new radio, NR) access technology, a wireless fidelity (wireless fidelity, Wi-Fi) system, a cellular system related to the 3rd generation partnership project (3rd generation partnership project, 3GPP), a communication system that supports convergence of a plurality of radio technologies, a future-oriented evolution system, or the like. This is not limited.

The following separately describes the terminal device and the RAN in FIG. 1 in detail.

1. Terminal device

The terminal device may be briefly referred to as a terminal. The terminal device may be a device having a wireless transceiver function. The terminal device may be mobile or fixed. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may include a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in a remote medical surgery (remote medical), a wireless terminal device in a smart grid (smart grid), a wireless terminal device in transportation safety (transportation safety), a wireless terminal device in a smart city (smart city), and/or a wireless terminal device in a smart home (smart home). Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device with a wireless communication function, a vehicle-mounted device, a wearable device, a terminal device in the 5th generation (the 5th generation, SG) network, a terminal device in a future evolved public land mobile network (public land mobile network, PLMN), or the like. The terminal device sometimes may also be referred to as user equipment (user equipment, UE). Optionally, the terminal device may communicate with a plurality of access network devices that use different technologies. For example, the terminal device may communicate with an access network device that supports LTE, may communicate with an access network device that supports 5G, or may implement dual connectivity to an access network device that supports LTE and an access network device that supports 5G. This is not limited in this disclosure.

In this disclosure, an apparatus configured to implement a function of a terminal device may be a terminal device, or may be an apparatus that can support a terminal device in implementing the function, for example, a chip system, a hardware circuit, a software module, or a hardware circuit combined with a software module. The apparatus may be installed in the terminal device or may be matched with the terminal device for use. In the technical solutions provided in this disclosure, an example in which the apparatus configured to implement the function of the terminal device is a terminal device and the terminal device is UE is used to describe the technical solutions provided in this disclosure.

In this disclosure, the chip system may include a chip, or may include a chip and another discrete component.

2. RAN

The RAN may include one or more RAN devices, for example, a RAN device 20. An interface between the RAN device and the terminal device may be a Uu interface (or referred to as an air interface). In future communication, names of these interfaces may remain unchanged, or may be replaced with other names. This is not limited in this disclosure.

The RAN device is a node or a device that enables the terminal device to access a radio network. The RAN device may also be referred to as a network device or a base station. The RAN device includes, for example, but is not limited to: a base station, a next generation NodeB (generation NodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, (for example, a home evolved NodeB or a home NodeB HNB), a baseband unit (base band unit, BBU), a transmitting and receiving point (transmitting and receiving point, TRP), a transmitting point (transmitting point, TP), and/or a mobile switching center. Alternatively, the access network device may be at least one of a central unit (central unit, CU), a distributed unit (distributed unit, DU), a central unit control plane (CU control plane, CU-CP) node, a central unit user plane (CU user plane, CU-UP) node, an integrated access and backhaul (integrated access and backhaul, IAB) node, a radio controller in a cloud radio access network (cloud radio access network, CRAN), or the like. Alternatively, the access network device may be a relay station, an access point, a vehicle-mounted device, a terminal device, a wearable device, an access network device in a 5G network, an access network device in a future evolved public land mobile network (public land mobile network, PLMN), or the like.

In this disclosure, an apparatus configured to implement a function of an access network device may be an access network device, or may be an apparatus that can support an access network device in implementing the function, for example, a chip system, a hardware circuit, a software module, or a hardware circuit combined with a software module. The apparatus may be installed in the access network device or may be matched with the access network device for use. In the technical solutions provided in this disclosure, an example in which the apparatus configured to implement the function of the access network device is an access network device and the access network device is a base station is used to describe the technical solutions provided in this disclosure.

(1) Protocol layer structure

Communication between an access network device and a terminal device complies with a protocol layer structure. The protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical layer (physical, PHY), or the like. For example, the user plane protocol layer structure may include at least one of the following: a service data adaptation protocol (service data adaptation protocol, SDAP) layer, a PDCP layer, an RLC layer, a MAC layer, a physical layer, or the like.

The protocol layer structure between the access network device and the terminal device may be considered as an access stratum (access stratum, AS) structure. Optionally, a non-access stratum (non-access stratum, NAS) may further exist on the AS, and is used by the access network device to forward information from a core network device to the terminal device, or is used by the access network device to forward information from the terminal device to a core network device. In this case, it may be considered that there is a logical interface between the terminal device and the core network device. Optionally, the access network device may forward the information between the terminal device and the core network device through transparent transmission. For example, a NAS message may be mapped to or included in RRC signaling as an element of the RRC signaling.

Optionally, the protocol layer structure between the access network device and the terminal device may further include an artificial intelligence (artificial intelligence, AI) layer used to transmit data related to an AI function.

(2) Central unit (central unit, CU) and distributed unit (distributed unit, DU)

An RAN device may include a CU and a DU. This design may be referred to as CU and DU separation. A plurality of DUs may be controlled by one CU together. For example, an interface between the CU and the DU may be referred to as an F 1 interface. A control plane (control plane, CP) interface may be F1-C, and a user plane (user plane, UP) interface may be F 1-U. Specific names of the interfaces are not limited in this disclosure. The CU and the DU may be divided based on a protocol layer of a radio network. For example, functions of a PDCP layer and a protocol layer (for example, an RRC layer and an SDAP layer) above the PDCP layer are set on the CU, and functions of a protocol layer (for example, an RLC layer, a MAC layer, and a PHY layer) below the PDCP layer are set on the DU. For another example, functions of a protocol layer above the PDCP layer are set on the CU, and functions of the PDCP layer and a protocol layer below the PDCP layer are set on the DU.

The division into the processing functions of the CU and the DU based on protocol layers is merely an example, and the division may alternatively be performed in another manner. For example, the CU or the DU may be divided to have functions having more protocol layers. For another example, the CU or the DU may further be divided to have some processing functions having protocol layers. In a design, some functions of the RLC layer and functions of a protocol layer above the RLC layer are set on the CU, and remaining functions of the RLC layer and functions of a protocol layer below the RLC layer are set on the DU. In another design, division into functions of the CU or the DU may alternatively be performed based on service types or other system requirements. For example, division may be performed based on latency. A function whose processing time needs to satisfy a latency requirement is set on the DU, and a function whose processing time does not need to satisfy the latency requirement is set on the CU.

Optionally, the CU may also have one or more functions of a core network. For example, the CU may be disposed on a network side to facilitate centralized management.

Optionally, a radio unit (radio unit, RU) of the DU is disposed remotely. The RU has a radio frequency function. For example, the DU and the RU may be divided at a PHY layer. For example, the DU may implement a higher-layer function at the PHY layer, and the RU may implement a lower-layer function at the PHY layer. When used for sending, functions of the PHY layer may include at least one of the following: adding a cyclic redundancy check (cyclic redundancy check, CRC) bit, channel coding, rate matching, scrambling, modulation, layer mapping, precoding, resource mapping, physical antenna mapping, or a radio frequency sending function. When used for receiving, functions of the PHY layer may include at least one of the following: CRC check, channel decoding, de-rate matching, descrambling, demodulation, layer de-mapping, channel detection, resource de-mapping, physical antenna de-mapping, or a radio frequency receiving function. The higher-layer functions of the PHY layer may include a part of functions of the PHY layer. For example, the part of functions are closer to the MAC layer. The lower-layer functions of the PHY layer may include another part of functions of the PHY layer. For example, the part of functions are closer to a radio frequency function. For example, the higher-layer functions of the PHY layer may include adding a CRC bit, channel coding, rate matching, scrambling, modulation, and layer mapping; and the lower-layer functions of the PHY layer may include precoding, resource mapping, physical antenna mapping, and a radio frequency sending function. Alternatively, the higher-layer functions of the PHY layer may include adding a CRC bit, channel coding, rate matching, scrambling, modulation, layer mapping, and precoding; and the lower-layer functions of the PHY layer may include resource mapping, physical antenna mapping, and a radio frequency sending function. For example, the higher-layer functions of the PHY layer may include CRC check, channel decoding, de-rate matching, decoding, demodulation, and layer de-mapping; and the lower-layer functions of the PHY layer may include channel detection, resource de-mapping, physical antenna de-mapping, and a radio frequency receiving function. Alternatively, the higher-layer functions of the PHY layer may include CRC check, channel decoding, de-rate matching, decoding, demodulation, layer de-mapping, and channel detection; and the lower-layer functions of the PHY layer may include resource de-mapping, physical antenna de-mapping, and a radio frequency receiving function.

Optionally, the functions of the CU may further be divided, and the control plane and the user plane are separated and implemented by using different entities, namely, a control plane CU entity (that is, a CU-CP entity) and a user plane CU entity (that is, a CU-UP entity). The CU-CP entity and the CU-UP entity may be separately coupled to or connected to the DU to jointly complete a function of the RAN device.

In the foregoing architecture, signaling generated by the CU may be sent to a terminal device by using the DU, or signaling generated by a terminal device may be sent to the CU by using the DU. For example, signaling at the RRC layer or the PDCP layer may be finally processed as signaling at the physical layer and sent to the terminal device, or is converted from signaling received from the physical layer. Based on such an architecture, the signaling of the RRC layer or the PDCP layer may be considered as being sent by using the DU, or being sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of this disclosure. For example, when the method in this disclosure is performed by an access network device, the method may be specifically performed by at least one of the CU, the CU-CP, the CU-UP, the DU, the RU, or a near-real-time RIC described below. The methods performed by the modules also fall within the protection scope of this disclosure.

It should be noted that, because a network device in this disclosure is mainly an access network device, in the following, the "network device" may be an "access network device" unless otherwise specified.

It should be understood that a quantity of devices in the communication system shown in FIG. 1 is merely used as an example, and this disclosure is not limited thereto. In actual application, the communication system may further include more terminal devices and more RAN devices, and may further include another device, for example, may include a core network device and/or a node configured to implement an artificial intelligence function.

The network architecture shown in FIG. 1 is applicable to communication systems using various radio access technologies (radio access technology, RAT), for example, a 4G communication system, a 5G (or referred to as new radio (new radio, NR)) communication system, a transition system between an LTE communication system and a 5G communication system, where the transition system may also be referred to as a 4.5G communication system, or a future communication system, for example, a 6G communication system. A network architecture and a service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of a new service scenario, the technical solutions provided in this disclosure are also applicable to similar technical problems.

In addition to communication between an access network device and a terminal device, the method provided in this disclosure may also be used for communication between other communication devices, for example, communication between a macro base station and a micro base station in a wireless backhaul link, or communication between a first terminal device and a second terminal device in a sidelink (sidelink, SL). This is not limited. This disclosure is described by using communication between a network device and a terminal device as an example.

For ease of understanding this disclosure, the following briefly describes some technical terms in this disclosure.

1. Neural network (neural network, NN)

A neural network is a specific implementation form of a machine learning technology. According to a universal approximation theorem, the neural network can theoretically approximate to any continuous function, so that the neural network has a capability of learning any mapping. In a conventional communication system, rich expertise is required to design a communication module. However, in a neural network-based deep learning communication system, an implicit pattern structure may be automatically discovered from a large quantity of data sets and a mapping relationship between data may be established, to obtain performance better than that of a conventional modeling method.

For example, a deep neural network (deep neural network, DNN) is a neural network with a large quantity of layers. Depending on different network structures and/or use scenarios, the DNN may include a multi-layer perceptron (multi-layer perceptron, MLP), a convolutional neural network (convolutional neural networks, CNN), a recurrent neural network (recurrent neural network, RNN), and the like. A specific form of the DNN is not limited in this disclosure.

2. AI model

An AI model is a specific implementation of an AI function, and the AI model represents a mapping relationship between an input and an output of a model. The AI model may be a neural network, a linear regression model, a decision tree model, a support vector machine (support vector machine, SVM), a Bayesian network, a Q learning model, another machine learning model, or the like. In this disclosure, the AI function may include at least one of the following: data collection (collecting training data and/or inference data), data preprocessing, model training (or referred to as model learning), model information release (configuring model information), model verification (verifying a trained model), model inference (using the trained model for inference) or inference result release. Inference may also be referred to as prediction. Optionally, the AI model may include a machine learning (machine learning, ML) model.

3. Bilateral model

A bilateral model is also referred to as a dual-ended model, a collaboration model, a joint model, or the like. In this disclosure, the bilateral model is an AI model formed by combining two or more sub AI models. The plurality of sub AI models are not necessarily deployed on a same node, but may be distributed on two or more nodes. The plurality of sub AI models forming the AI model are jointly trained, that is, the plurality of sub AI models match each other. For example, auto-encoders (auto-encoder, AE), separately deployed on different nodes, of an encoder and a decoder are typical bilateral models. The encoder and the decoder are trained together, to be specific, the decoder can understand output information of the encoder, and can decode the output information of the encoder into input information of the encoder.

In this disclosure, unless otherwise specified, a quantity of a noun indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. When indicating a feature, the character "/" may indicate an "or" relationship between associated objects. For example, A/B indicates A or B. When indicating an operation, the symbol "/" may further indicate a division operation. In addition, in this disclosure, the symbol "×" may be replaced with the symbol "*".

The ordinal numbers such as "first" and "second" in this disclosure are used to distinguish between a plurality of objects, and are not used to limit sizes, content, orders, time sequences, application scenarios, priorities, importance, or the like of the plurality of objects. For example, first channel environment information and second channel environment information may be same channel environment information, or may be different channel environment information. In addition, such names do not indicate different sizes, obtaining manners, content, priorities, application scenarios, importance, or the like of the two pieces of channel environment information.

In this disclosure, the indication may include a direct indication or an indirect indication. For example, that A indicates B may mean that A directly indicates B, or may mean that A indirectly indicates B. For example, A indicates C, and A indicates B based on a correspondence between C and B; or C indicates B, and A indicates B based on a correspondence between A and C.

Currently, if the UE sends an uplink signal to a base station, the uplink signal may be obtained according to a specified rule, and the specified rule is, for example, specified in a protocol. For example, the UE sends uplink data to the base station, and the uplink data needs to be demodulated by using a DMRS. In a 5G system, there are many reference signals having different functions. The DMRS is a reference signal used for data demodulation. In other words, a channel response of a time-frequency resource occupied by data may be estimated by using the DMRS. There is a trade-off relationship between channel estimation accuracy at a signal receive end and DMRS density/overheads. If a channel exhibits relatively severe frequency selectivity (that is, the channel changes greatly in frequency domain), the DMRS density in frequency domain needs to be increased. Similarly, if a channel changes relatively quickly in time domain, more resources need to be occupied in time domain to deploy the DMRS. After the DMRS density in time and frequency domain is determined, a location of the DMRS in the time-frequency resource needs to be further considered. For example, when a channel is stable, to reduce an interpolation error and implementation complexity, DMRSs may be evenly allocated in frequency and time domain. Because the DMRS does not transmit any data signal useful to a user, the DMRSs need to be allocated at an appropriate density to maximize a throughput.

Currently, when sending uplink data to a base station, UE may add a DMRS to demodulate the uplink data. A pattern of the DMRS (which may be understood as a distribution location of the DMRS on the time-frequency resource) is predefined by using a protocol. Both the UE and the base station determine the pattern of the DMRS based on content predefined in the protocol. The protocol predefined manner may be considered as a specified rule. DMRS patterns predefined in a protocol are limited. Regardless of a scenario, the UE may send a DMRS by using a same pattern. Such a DMRS has relatively poor adaptability to a scenario, and may cause relatively poor transmission quality or receiving quality of an uplink signal. For example, a current channel has relatively severe frequency selectivity, but DMRS density in frequency domain is relatively low according to a DMRS pattern predefined in a protocol. Apparently, the frequency selectivity of the channel cannot be resisted. If a base station performs channel estimation based on such a DMRS, a channel estimation result may be inaccurate. Consequently, correct uplink data cannot be obtained through demodulation.

In view of this, the technical solutions of this disclosure are provided. In this disclosure, UE may obtain first channel environment information, and obtain first information based on the first channel environment information, and the first information may be used for to-be-sent uplink information to obtain an uplink signal. The first channel environment information reflects, for example, a current channel environment. The uplink signal obtained based on the first channel environment information is an uplink signal obtained with the current channel environment considered. Therefore, the uplink signal has strong environment adaptability, thereby helping improve transmission quality and a transmission success rate of the uplink signal. In addition, a downlink reference signal used to obtain the first channel environment information is obtained based on a first manner, and both the UE and an access network device obtain channel environment information in the first manner, so that the channel environment information obtained by the UE and the access network device can adapt to each other. Therefore, the access network device can correctly process the uplink signal from the UE. In such a manner, the channel environment information or the first information does not need to be transmitted between the access network device and the UE, thereby reducing transmission overheads.

FIG. 2 shows an architecture of a communication network in the communication system 10 according to this disclosure. Any subsequently provided embodiment is applicable to the architecture. A network device included in FIG. 2 is, for example, the access network device 20 included in the communication system 10. A terminal device included in FIG. 2 is, for example, the communication apparatus 30 included in the communication system 10. The network device can communicate with the terminal device.

A machine learning technology in this disclosure is a specific implementation of an artificial intelligence (artificial intelligence, AI) technology. For ease of understanding, the following describes the AI technology. It may be understood that the descriptions are not intended to limit this disclosure.

AI is a technology that performs complex calculation by simulating the human brain. With improvement of data storage and capabilities, AI is more widely applied.

In this disclosure, an independent network element (for example, referred to as an AI network element, an AI node, or an AI device) may be introduced into the communication system shown in FIG. 1 to implement an AI function. The AI network element may be directly connected to an access network device, or may be indirectly connected to an access network device by using a third-party network element. Optionally, the third-party network element may be a core network element. Alternatively, an AI entity may be configured or disposed in another network element in the communication system to implement an AI-related operation. The AI entity may also be referred to as an AI module, an AI unit, or another name, and is mainly configured to implement some or all AI functions. A specific name of the AI entity is not limited in this disclosure. Optionally, the another network element may be an access network device, a core network device, operation, administration, and maintenance (operation, administration and maintenance, OAM), or the like. In this case, a network element that performs the AI function is a network element with a built-in AI function.

In this disclosure, the AI function may include at least one of the following: data collection, model training (or model learning), model information release, model inference (or referred to as model inference, inference, or prediction), model monitoring (for example, monitoring whether a function of a model is normal), model verification, inference result release, or the like. The AI function may also be referred to as an AI (related) operation or an AI-related function.

In this disclosure, the OAM is used to operate, administer, and/or maintain a core network device (operation, administration and maintenance of the core network device), and/or is used to operate, administer, and/or maintain an access network device (operation, administration and maintenance of the access network device).

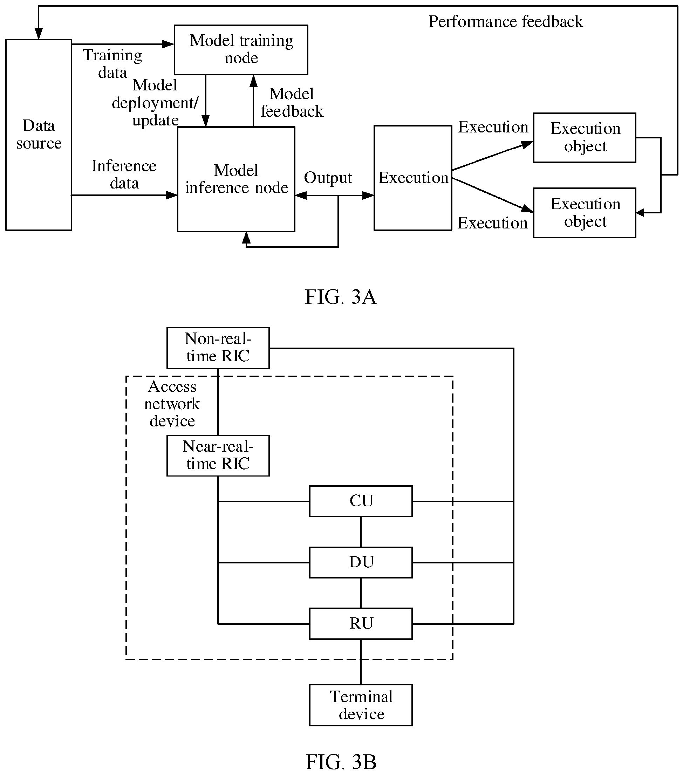

FIG. 3A is a diagram of a first application framework of AI in a communication system. A data source (data source) is used to store training data and inference data. A model training node (model training node) performs training or update training on training data (training data) provided by the data source to obtain an AI model, and deploys the AI model on a model inference node (model inference node). The AI model represents a mapping relationship between an input and an output of the model. Obtaining an AI model through learning by the model training node is equivalent to obtaining the mapping relationship between the input and the output of the model through learning by the model training node by using training data. The model inference node uses the AI model to perform inference based on inference data provided by the data source and obtain an inference result. The method may alternatively be described as follows: A model inference node inputs inference data into an AI model, and obtains an output by using the AI model, where the output is an inference result. The inference result may indicate a configuration parameter used (executed) by an execution object, and/or an operation performed by an execution object. The inference result may be uniformly planned by an execution (actor) entity, and sent to one or more execution objects (for example, a core network element, a base station, or UE) for execution. Optionally, the model inference node may feed back the inference result of the model inference node to the model training node. This process may be referred to as a model feedback. The feedback inference result is used by the model training node to update the AI model, and the updated AI model is deployed in the model inference node. Optionally, the execution object may feed back, to the data source, a network parameter collected by the execution object. This process may be referred to as a performance feedback, and the feedback network parameter may be used as training data or inference data.

For example, the foregoing AI model includes a first AI model and a second AI model in a bilateral model. The first AI model is deployed on a UE side, and the second AI model is deployed on an access network device side. An inference result of the first AI model is used to process to-be-sent information. An inference result of the second AI model is, for example, a decoding result, or is used to decode received data.

The application framework shown in FIG. 3A may be deployed in the network element shown in FIG. 1. For example, the application framework in FIG. 3A may be deployed in at least one of the terminal device, the access network device, a core network device (not shown), or an independently deployed AI network element (not shown) in FIG. 1. For example, the AI network element (which may be considered as a model training node) may analyze or train training data (training data) provided by the terminal device and/or the access network device to obtain a model. At least one of the terminal device, the access network device, or the core network device (which may be considered as a model inference node) may perform inference by using the model and inference data to obtain an output of the model. The inference data may be provided by the terminal device and/or the access network device. An input of the model includes the inference data, and the output of the model is an inference result corresponding to the model. At least one of the terminal device, the access network device, or the core network device (which may be considered as an execution object) may perform a corresponding operation based on the inference result. The model inference node and the execution object may be the same or may be different. This is not limited.

With reference to FIG. 3B to FIG. 3E, the following describes, by using an example, a network architecture to which the method provided in this disclosure can be applied.

As shown in FIG. 3B, in a first possible implementation, an access network device includes a near-real-time radio access network intelligent controller (RAN intelligent controller, RIC) for model training and inference. For example, the near-real-time RIC may be configured to train an AI model and use the AI model for inference. For example, the near-real-time RIC may obtain information about a network side and/or a terminal side from at least one of a CU, a DU, and an RU, and the information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

As shown in FIG. 3B, in a second possible implementation, a non-real-time RIC (optionally, the non-real-time RIC may be located in OAM or a core network device) is included outside an access network, and is used for model training and inference. For example, the non-real-time RIC is configured to train an AI model and use the model for inference. For example, the non-real-time RIC may obtain information about a network side and/or a terminal side from at least one of a CU, a DU, or an RU, and the information may be used as training data or inference data. An inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

As shown in FIG. 3B, in a third possible implementation, an access network device includes a near-real-time RIC, and a non-real-time RIC is included outside the access network device (optionally, the non-real-time RIC may be located in OAM or a core network device). Same as the second possible implementation, the non-real-time RIC may be used to perform model training and inference; and/or same as the first possible implementation, the near-real-time RIC may be used to perform model training and inference; and/or the non-real-time RIC performs model training, and the near-real-time RIC may obtain AI model information from the non-real-time RIC, obtain information about a network side and/or a terminal side from at least one of a CU, a DU, or an RU, and obtain an inference result by using the information and the AI model information. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A and use the model A for inference. For example, the non-real-time RIC is configured to train a model B and use the model B for inference. For example, the non-real-time RIC is configured to train a model C and send information about the model C to the near-real-time RIC, and the near-real-time RIC uses the model C for inference.

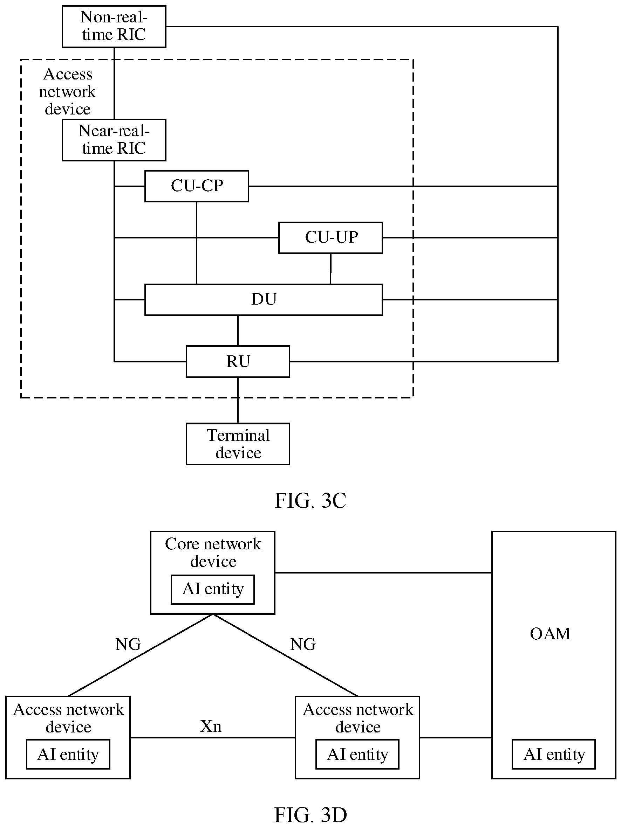

FIG. 3C is an example diagram of a network architecture to which a method provided in this disclosure can be applied. Compared with FIG. 3B, a CU in FIG. 3B is separated into a CU-CP and a CU-UP.

FIG. 3D is an example diagram of a network architecture to which a method provided in this disclosure can be applied. As shown in FIG. 3D, optionally, an access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by the AI entities of the OAM and the core network device are different, and/or models used for inference are different.

In this disclosure, models are different in at least one of the following: a structure parameter of a model (for example, at least one of a quantity of neural network layers, a neural network width, a connection relationship between layers, a weight value of a neuron, an activation function of a neuron, or an offset in an activation function), an input parameter of a model (for example, a type of the input parameter and/or a dimension of the input parameter), or an output parameter of a model (for example, a type of the output parameter and/or a dimension of the output parameter).

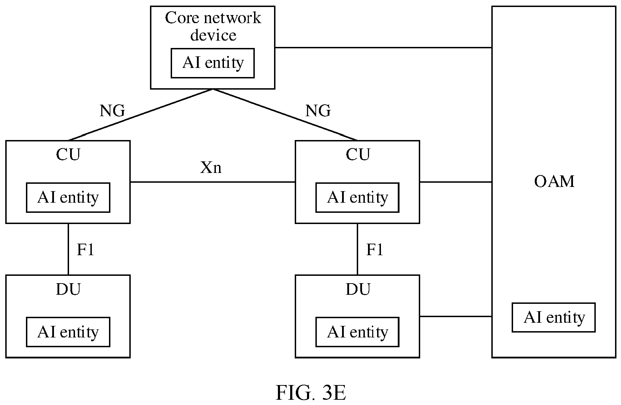

FIG. 3E is an example diagram of a network architecture to which a method provided in this disclosure can be applied. Compared with FIG. 3D, an access network device in FIG. 3E is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each include an AI entity, models obtained through training by the AI entities of the CU and the DU are different, and/or models used for inference are different. Optionally, the CU in FIG. 3E may further be split into a CU-CP and a CU-UP. Optionally, one or more AI models may be deployed in the CU-CP. Optionally, one or more AI models may be deployed in the CU-UP.

In FIG. 3D or FIG. 3E, the OAM of the access network device and the OAM of the core network device are uniformly deployed. Alternatively, as described above, in FIG. 3D or FIG. 3E, the OAM of the access network device and the OAM of the core network device may be separately deployed.

In this disclosure, one model may obtain one output through inference, and the output includes one or more parameters. Learning processes or training processes of different models may be deployed in different devices or nodes, or may be deployed in a same device or node. Inference processes of different models may be deployed in different devices or nodes, or may be deployed in a same device or node.

Optionally, the foregoing AI model includes a first AI model in a bilateral model. On a UE side, an inference result of the first AI model is, for example, used to process to-be-sent information. Optionally, the foregoing AI model includes a second AI model in the bilateral model. On a network side, an inference result of the second AI model is, for example, a decoding result, or is used to decode received data.

It should be noted that, in the frameworks in FIG. 3A to FIG. 3D, the AI model may be briefly referred to as a model, a network model, or the like for short, and may be considered as a mapping from an input parameter (for example, an input matrix) to an output parameter (for example, an output matrix). For example, for a decoder model on the network side, the input matrix may be a matrix determined based on received CSI. Training data may include a known input matrix, or include a known input matrix and a corresponding output matrix, and is used to train the AI model. The training data may be data from an access network device, a CU, a CU-CP, a CU-UP, a DU, an RU, UE, and/or another entity, and/or data obtained through inference by using an AI technology. This is not limited. Inference data includes an input matrix, and is used to infer an output matrix by using the model. The inference data may be data from an access network device, a CU, a CU-CP, a CU-UP, a DU, an RU, UE, and/or another entity. An inferred matrix may be considered as policy information, and is sent to an execution object. The inferred matrix may be sent to the access network device, the CU, the CU-CP, the CU-UP, the DU, the RU, the UE, or the like for further processing, for example, for data processing.

In this disclosure, on the network side, the second AI model in the bilateral model, for example, a second ML model, may be deployed in an access network device (for example, a base station) or outside an access network device, for example, deployed in OAM, an AI network element, or a core network device, or deployed in an RU, a DU, or a near-real-time RIC. This is not limited. An inference result of the second AI model, for example, the second ML model, may be obtained by the access network device through inference, or may be sent to the access network device after the non-real-time RIC performs inference. To simplify description, this disclosure is described by using an example in which the second AI model, for example, the second ML model, is deployed on the access network device side.

In this disclosure, the first AI model, for example, the first ML model, in the bilateral model is deployed in the UE, and the UE may perform inference by using the first AI model, for example, the first ML model. This disclosure is described by using an example in which the first AI model is deployed on the UE side.

The following describes the methods provided in this disclosure with reference to the accompanying drawings. Steps or operations included in the methods are merely examples, and other operations or variations of various operations may further be performed in this disclosure. In addition, the steps may be performed in an order different from that presented in this disclosure, and it is possible that not all the operations need to be performed. It can be understood that "data" in this disclosure may include information carried on a control channel, for example, one or more of control information or service information; or may include information carried on a data channel, for example, one or more of service information or control information.

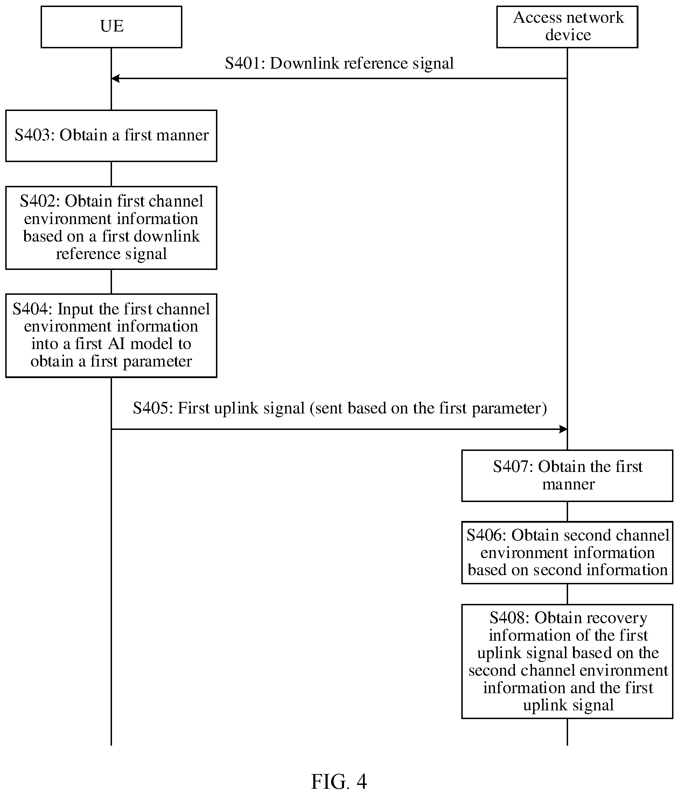

FIG. 4 is a flowchart of a first uplink signal sending and receiving method according to this disclosure.

S401: An access network device sends a downlink reference signal. Correspondingly, UE receives the downlink reference signal from the access network device. Optionally, the downlink reference signal is, for example, a channel state information reference signal (channel state information reference signal, CSI-RS) or a synchronization signal and physical broadcast channel block (synchronization signal and physical broadcast channelblock, SSB).

The access network device may send one or more downlink reference signals, and the UE may correspondingly receive the one or more downlink reference signals.

S402: The UE obtains first channel environment information based on a first downlink reference signal. The UE may obtain channel environment information based on the first downlink reference signal among the received downlink reference signals. For example, the channel environment information obtained by the UE is referred to as the first channel environment information. The first channel environment information may represent a current status of a downlink channel.

For example, the UE may directly extract the first channel environment information from the first downlink reference signal. The UE may extract one piece of channel environment information from one first downlink reference signal, for example, referred to as sub information. In this case, the UE may extract a plurality of pieces of sub information from a plurality of first downlink reference signals. The first channel environment information may be obtained based on one piece of sub information or a plurality of pieces of sub information.

Alternatively, the UE may measure the first downlink reference signal to obtain a measurement amount. The measurement amount includes, for example, a signal-to-noise ratio (signal-to-noise ratio, SNR) or reference signal received power (reference signal received power, RSRP). The UE may generate a measurement report based on the obtained measurement amount, and may extract the first channel environment information from the measurement report. The measurement report is, for example, a CSI report (report). In addition, because the UE may send the measurement report to the access network device, the measurement report may also be referred to as CSI feedback information. The UE may measure one or more first downlink reference signals to obtain one measurement report. The UE may extract the first channel environment information from all or some measurement reports obtained through measurement. The UE may extract one piece of channel environment information, for example, referred to as sub information, from one measurement report. In this case, the UE may extract a plurality of pieces of sub information from a plurality of measurement reports. The first channel environment information may be obtained based on one piece of sub information or a plurality of pieces of sub information.

The measurement report may include one or more pieces of information such as a layer 1 (L1)-RSRP, a channel quality indicator (channel quality indicator, CQI), a precoding matrix indicator (precoding matrix indicator, PMI), or a CSI reference signal resource indicator (CSI RS resource indicator, CRI). The UE may extract channel environment information from some or all of information included in the measurement report.

Optionally, the first channel environment information may include information about a downlink channel, change information of a downlink channel in time domain and/or frequency domain (or referred to as selection information or the like of a downlink channel in time domain and/or frequency domain), receive power information of the first downlink reference signal, or preprocessing information.

The information about the downlink channel included in the first channel environment information is, for example, a downlink channel matrix recovered based on the first downlink reference signal or the measurement report.

The receive power information of the downlink reference signal included in the first channel environment information is, for example, an L1-RSRP obtained by the UE by measuring the downlink reference signal. The preprocessing information may be obtained by preprocessing one or more pieces of the following information: the information about the downlink channel, the change information of the downlink channel in time domain and/or frequency domain, or the receive power information of the first downlink reference signal. A preprocessing manner includes, for example, calculating an average value, weighted combination, or splicing.

The change information of the downlink channel in frequency domain may indicate frequency domain selectivity of the downlink channel and/or a coherence bandwidth of the downlink channel. The change information of the downlink channel in time domain may indicate time domain selectivity of the downlink channel and/or a coherence time of the downlink channel.

The frequency domain selectivity of the downlink channel refers to a change of the downlink channel on different subcarriers in frequency domain. The time domain selectivity of the downlink channel refers to a change of the downlink channel on different orthogonal frequency division multiplexing (orthogonal frequency division multiplexing, OFDM) symbols in time domain. For example, the UE may estimate a downlink channel on a resource block (resource block, RB). The RB includes 12 subcarriers and 14 OFDM symbols (where a subcarrier interval of 15 kHz is used as an example), and there are 168 resource elements (resource element, RE) in total. If the downlink channel has flat fading (flat fading) and time invariant (time invariant) features, in a channel estimation process, it may be considered that coefficients (channel coefficient) of the downlink channel are a same complex number in the 168 REs, and the complex number may be expressed as a + bj, where a and b are unconstraint (unconstraint) real numbers. Alternatively, if the downlink channel has frequency domain selectivity, it means that the downlink channel may change even between two adjacent subcarriers. Alternatively, if the downlink channel has time domain selectivity, it means that the downlink channel may change even between two adjacent OFDM symbols.

As described above, the first channel environment information may be obtained based on one piece of sub information or a plurality of pieces of sub information. If the first channel environment information is obtained based on a piece of sub information, a manner is that the sub information is used as the first channel environment information. The sub information includes, for example, one or more of the information about the downlink channel, the change information of the downlink channel in time domain and/or frequency domain, or the receive power information of the first downlink reference signal.

Alternatively, if the first channel environment information is obtained based on a plurality of pieces of sub information, the first channel environment information may include the plurality of pieces of sub information. For example, any sub information of the plurality of pieces of sub information may include one or more of the information about the downlink channel, the change information of the downlink channel in time domain and/or frequency domain, or the receive power information of the first downlink reference signal. Alternatively, if the first channel environment information is obtained based on a plurality of pieces of sub information, the UE may preprocess the plurality of pieces of sub information, and use a processing result as the first channel environment information. For example, in a preprocessing manner, the plurality of pieces of sub information are spliced, and a multi-dimensional tensor obtained through splicing may be used as the first channel environment information. Alternatively, in another preprocessing manner, weighted combination is performed on the plurality of pieces of sub information, and a result obtained through weighted combination may be used as the first channel environment information. Alternatively, in still another preprocessing manner, an arithmetic average value or a weighted average value of the plurality of pieces of sub information is calculated, and a result obtained after the average value is calculated may be used as the first channel environment information. A matrix or an array with more than two dimensions may be referred to as a tensor.

In this disclosure, the UE needs to obtain the channel environment information, and the access network device also needs to obtain the channel environment information. Input information of a second AI model deployed on an access network device side also includes the channel environment information. The channel environment information (for example, the first channel environment information) obtained by the UE matches the channel environment information obtained by the access network device. In this way, a parameter that is of the first uplink reference signal and that is obtained by the first AI model based on the channel environment information may be the same as or similar to a parameter that is of the first uplink reference signal and that is obtained by the second AI model based on the channel environment information. Therefore, this disclosure further includes S403: The UE obtains a first manner. S403 may occur before S402, or may occur before S401. After obtaining the first manner, the UE may obtain the first downlink reference signal in the first manner. Alternatively, it may be understood that the UE may obtain the first channel environment information in the first manner. Alternatively, it may be considered that the first downlink reference signal used to obtain the first channel environment information is obtained in the first manner. The first downlink reference signal used to obtain the first channel environment information includes, for example, some or all downlink reference signals received by the UE. Correspondingly, the access network device may obtain channel environment information (for example, referred to as second channel environment information) based on second information corresponding to the first downlink reference signal. In this case, the access network device may determine the first downlink reference signal in the first manner, and further determine feedback information corresponding to the first downlink reference signal. Alternatively, it may be understood that the access network device may obtain the second channel environment information in the first manner.

The first manner may be configured by the access network device, may be predefined by using a protocol, or so on. If the first manner is configured by the access network device, S403 may be: The access network device sends information indicating the first manner. Correspondingly, the UE receives, from the access network device, the information indicating the first manner. Both the access network device and UE may obtain the channel environment information in the first manner. In this way, the first channel environment information obtained by the UE can match second channel environment information obtained by the access network device. An uplink signal sent by the UE is obtained based on the first channel environment information. Because the second channel environment information matches the first channel environment information, the access network device can correctly process the uplink signal from the UE. There may be a plurality of first manners, and a specific first manner to be used may be configured by the access network device or predefined by using a protocol. The following describes the first manner by using an example.

1. Time window manner

The time window manner may indicate all or some downlink reference signals in a first time window. For the UE, the time window manner is all or some downlink reference signals received by the UE in the first time window. For the access network device, the time window manner is all or some downlink reference signals sent by the access network device in the first time window, or the second information corresponding to all or some downlink reference signals sent by the access network device in the first time window. The second information is, for example, CSI feedback information that is among CSI feedback information received by the access network device and that is used to obtain the second channel environment information, and may be referred to as second CSI feedback information, and the second CSI feedback information is obtained by the UE by measuring all or some downlink reference signals. Alternatively, the second information is, for example, a second uplink reference signal used to obtain the second channel environment information. For a correspondence between a downlink reference signal and the second uplink reference signal, refer to the following description of the correspondence between the second uplink reference signal and the first downlink reference signal. A length of the first time window is greater than 0. The second uplink reference signal is, for example, a channel sounding reference signal (sounding reference signal, SRS).

It can be learned that for the UE and the access network device, because different steps are performed, implementations for the same first manner may also be different.

For example, the information that indicates the first manner and that is sent by the access network device in S403 may indicate the length of the first time window and a reference time of the first time window. In this case, both the UE and the access network device can determine the first time windows at a same location. The reference time of the first time window is, for example, referred to as a first reference time. The first reference time is, for example, a start time or an end time of the first time window. For the UE, the first reference time is, for example, a time at which the UE receives scheduling information from the access network device. The scheduling information is used to schedule an uplink signal to be sent by the UE. For example, the scheduling information is downlink control information (downlink control information, DCI). For the access network device, the first reference time is, for example, a time at which the access network device sends the scheduling information. Alternatively, for the UE, the first reference time is, for example, a time at which the UE sends the first uplink signal. For the access network device, the first reference time is, for example, a time at which the access network device receives the first uplink signal from the UE. If an information transmission time between the access network device and the UE is ignored, it may be considered that the first reference times determined by the UE and the access network device are consistent. Therefore, the access network device and the UE can determine the first time windows at the same location to determine a same first downlink reference signal or same CSI feedback information, for example, one or more of a CSI measurement report, a second uplink reference signal using a same spatial filtering parameter or a same spatial filter as the first downlink reference signal, or the like.

If the first downlink reference signal used to extract the channel environment information includes some downlink reference signals in the first time window, the included reference signals can also be configured by the access network device or predefined in a protocol. For example, the access network device may configure one or more time segments in the first time window, for example, may configure a length and a start location of each time segment. The UE may extract the channel environment information by using the first downlink reference signals received in the one or more time segments. The access network device may further determine the second information corresponding to the downlink reference signals sent in the one or more time segments.

The access network device may obtain the channel environment information (for example, the second channel environment information) based on the second information corresponding to the first downlink reference signal. Content such as the second information is described below.

2. Quantity manner

Similarly, for the UE and the access network device, because different steps are performed, implementations for the same first manner may also be different. For example, for the UE, the quantity manner is N first downlink reference signals received by the UE before a second reference time. For the access network device, the quantity manner is M pieces of second information corresponding to the N first downlink reference signals sent by the access network device before the second reference time. The M pieces of second information are, for example, second CSI feedback information (where the M pieces of second information are obtained by the UE by measuring the N first downlink reference signals) or the second uplink reference signal, where N and M are positive integers, and N is equal to or not equal to M. For another example, for the UE, the quantity manner is P pieces of CSI feedback information sent by the UE before the second reference time (or first downlink reference signals corresponding to P pieces of CSI feedback information sent by the UE before the second reference time) or P second uplink reference signals sent by the UE before the second reference time (or first downlink reference signals corresponding to P second uplink reference signals sent by the UE before the second reference time). For the access network device, the quantity manner is P pieces of second information received by the access network device before the second reference time. The second information is, for example, the CSI feedback information or the second uplink reference signal. P is a positive integer.

For how to select the second reference time of the UE and the access network device, refer to the foregoing description of the first reference time. One piece of CSI feedback information may correspond to one or more downlink reference signals. Such a correspondence means that the UE measures the one or more downlink reference signals to obtain the CSI feedback information.

It can be understood that a quantity of first downlink reference signals and/or a quantity of pieces of second information may be determined based on a quantity of corresponding configuration identifiers, resource configuration identifiers, or resource set configuration identifiers, or may be determined in another manner. This is not limited in this disclosure, provided that manners are consistent between the terminal device and the access network device.

That the second uplink reference signal corresponds to the first downlink reference signal may mean that the second uplink reference signal and the first downlink reference signal use a same spatial filtering parameter or a same spatial filter; in other words, that the second uplink reference signal corresponds to the first downlink reference signal may mean that when sending the second uplink reference signal and receiving the first downlink reference signal, the UE uses the same spatial filtering parameter or the same spatial filter. For example, if a weighted matrix used to map an antenna port (antenna port) of the second uplink reference signal to a physical antenna is consistent with a weighted matrix used to map an antenna port of the first downlink reference signal to the physical antenna, it indicates that the second uplink reference signal and the first downlink reference signal use the same spatial filter (or referred to as a space domain filter). The spatial filter may be the weighted matrix, or the spatial filter may be referred to as a spatial filtering weighted matrix or the like. Optionally, the access network device determines second uplink reference signals using the same spatial filter as the first downlink reference signal, and may send the second uplink reference signals to the UE by using higher layer signaling. In this way, the access network device may determine a corresponding second uplink reference signal based on the second uplink reference signal and the first downlink reference signal that are determined by the access network device and that use the same spatial filter. Optionally, the access network device checks the higher layer signaling sent to the UE, and the higher layer signaling may indicate a spatial configuration relationship between a downlink reference signal and an uplink reference signal. If the higher layer signaling indicates that there is a spatial configuration relationship between the first downlink reference signal and the second uplink reference signal, the UE sends the second uplink reference signal by using spatial filters with a spatial filtering parameter that are used by the first downlink reference signal. Therefore, the access network device can determine that the second uplink reference signal and the first downlink reference signal use the same spatial filter. Optionally, the higher layer signaling includes, for example, one or more of RRC signaling or a MAC control element (control element, CE). One second uplink reference signal may correspond to one or more first downlink reference signals.

For example, the information that indicates the first manner and that is sent by the access network device in S403 may indicate a value of N or P and the second reference time, so that both the UE and the access network device can determine a same first downlink reference signal. The information indicating the first manner indicates the value of N, and an implementation process of the UE is used as an example. The UE may mark, as the $0^{th}$ first downlink reference signal, a first downlink reference signal received before the second reference time, and then trace forward N - 1 downlink reference signals to determine N first downlink reference signals. Alternatively, the UE may mark, as the $0^{th}$ first downlink reference signal, a downlink reference signal corresponding to the $1^{st}$ measurement report sent to the access network device before the second reference time, and then trace forward N - 1 measurement reports to determine corresponding N first downlink reference signals.

In addition to the foregoing two manners, the first manner may further include another manner. This is not limited. In the first manner, the channel environment information obtained by the access network device and the UE can adapt to each other, so that the access network device can correctly process an uplink signal from the UE.

Optionally, a running condition may further be set for the first AI model. The running condition may be configured by the access network device, predefined by using a protocol, or autonomously set by the UE. For example, if the running condition of the first AI model is met, the UE may run the first AI model. For example, the UE may perform S402, to be specific, obtain the first channel environment information, and may perform a subsequent step such as S404. If the running condition of the first AI model is not met, the UE does not run the first AI model. For example, the UE does not perform S402, to be specific, even if the UE receives the first downlink reference signal, the UE does not need to extract the channel environment information, and the UE does not perform S404 or the like. If the UE does not run the first AI model, the UE may send an uplink signal in a conventional manner. For example, the UE may determine a pattern of an uplink reference signal based on content predefined in a protocol.

For example, if the UE obtains, in the time window manner, the first downlink reference signal used to extract the channel environment information, the running condition of the first AI model includes, for example, that duration in which the UE communicates with the access network device is greater than or equal to a length of the first time window. For another example, if the UE obtains, in the quantity manner, the first downlink reference signal used to extract the channel environment information, the running condition of the first AI model includes, for example, that a quantity of measurement reports or second uplink reference signals sent by the UE before the second reference time is greater than or equal to P.

If the running condition is set for running of the first AI model, after determining whether the running condition of the first AI model is met, optionally, the UE may send status indication information to the access network device. If the UE determines that the running condition of the first AI model is met, the status indication information indicates that the running condition of the first AI model is met, or indicates to run the first AI model. If the UE determines that the running condition of the first AI model is not met, the status indication information indicates that the running condition of the first AI model is not met, indicates not to run the first AI model, or indicates to determine a pattern of an uplink reference signal in a conventional manner. Optionally, the UE may send the status indication information to the access network device before performing S402.

S404: The UE inputs the first channel environment information into the first AI model to obtain first information. The first information may include a first parameter. For example, the first parameter is a parameter of the first uplink reference signal, and therefore, may also be referred to as the first parameter of the first uplink reference signal. Optionally, the first uplink reference signal is a DMRS, or may be another uplink reference signal used for data demodulation, for example, one or more of an SSB or a primary synchronization signal, a secondary synchronization signal, or a physical broadcast channel included in an SSB.

After obtaining the first channel environment information, the UE may input the first channel environment information into the first AI model to obtain the first information output by the first AI model. The first AI model is also referred to as, for example, an RS pattern generation AI model. A name is not limited. The following describes a process in which the UE obtains the first AI model.

For example, the access network device or a third-party device (for example, an AI network element) may train a network model in advance. The network model includes, for example, a first AI model and a second AI model. The first AI model is deployed on a UE side, and the second AI model may be deployed on an access network device side.

The first AI model and the second AI model need to match each other. For example, the first AI model and the second AI model belong to a same bilateral model. In this case, a possible model training manner is joint end-to-end training of bilateral models. Processing such as resource mapping may be performed on the output information of the first AI model and modulated data. After the corresponding resource mapping is completed, the output information of the first AI model and the modulated data are transmitted by using a radio channel. A signal received by using the radio channel may be used as one piece of input information of the second AI model. In this way, two AI models can be trained at the same time. A possible training loss function is a sum cross-entropy (sum cross-entropy) or a mean square error (mean square error, MSE) between an original information bit and a final decoded bit. Processing such as modulation is performed on the original information bit to obtain the foregoing modulated data. The final decoded bit is, for example, output information of the second AI model, or information obtained after the signal received by using the radio channel is processed based on output information of the second AI model.

In addition, in a training phase, because training of the two models requires channel environment information as a training sample, better matching between the training sample and an actual communication environment indicates a better effect of a trained model in actual application. There may be various actual communication environments (for example, channel types). For example, different transmit powers (signal-to-noise ratios), indoor environments, outdoor environments, and the like all cause different communication environments. The access network device or the third-party device may establish different training datasets for different communication environments. During training, all training datasets are used to train one group of models (that is, one first AI model and one second AI model). In this way, a trained model can have relatively good generalization, and can adapt to various communication environments.

Alternatively, during training, different training datasets may be used to train different models, that is, a plurality of groups of models may be obtained through training. Each group of models includes one first AI model and one second AI model, and different groups of models may correspond to different communication environments. In this case, a group of models may be selected based on a current communication environment. Such a model has better adaptability to the communication environment.

If the access network device or the third-party device obtains only one group of models through training, the access network device may send, to the UE, information about the first AI model included in the group of models.

Alternatively, if the access network device or the third-party device obtains a plurality of groups of models through training, the access network device may indicate a group of models used by the UE or a group of first AI models used by the UE. For example, the access network device determines a group of models based on a current communication environment, and sends, to the UE, information about a first AI model included in the group of models. The access network device may not send, to the UE, information about a first AI model included in another group model. Alternatively, the access network device may send, to the UE, information about a first AI model included in each determined group of models. When a model needs to be used, the access network device sends first indication information to the UE. The first indication information may include an index of a group of models (or include one first AI model). In this case, the UE may further determine one first AI model from a plurality of first AI models.

Alternatively, if the access network device sends, to the UE, information about first AI models included in a plurality of groups of models, the UE may also determine a group of models used by the UE or a first AI model in a group of models used by the UE. For example, the UE may determine, based on a current communication environment, one group of models from a plurality of groups of models, or determine one first AI model from a plurality of first AI models. In this case, the UE may send second indication information to the access network device. The second indication information may include an index of a first AI model selected by the UE, so that the access network device can select a second AI model that belongs to the same model group as the first AI model.

For example, information about the first AI model includes parameter information of the first AI model. To reduce transmission overheads, optionally, before sending the parameter information of the first AI model to the UE, the access network device may compress the parameter information of the first AI model. In this case, the compressed parameter information may be sent to the UE. A compression manner includes but is not limited to one or more of model pruning, model distillation, model quantization, or the like. Model pruning means that some parameter information of the first AI model is sent to the UE, and remaining parameter information is not sent. In this case, the UE obtains some parameter information of the first AI model, but does not obtain all parameter information of the first AI model. This is equivalent to pruning some parameters to reduce the transmission overheads. Model distillation means that a third AI model is obtained based on the parameter information of the first AI model, and a scale of the third AI model is less than a scale of the first AI model. It may be understood that the first AI model is a model with a larger scale, and the first AI model may correspond to a larger quantity of parameters. However, the third AI model is a model with a smaller scale, and a quantity of parameters corresponding to the third AI model may be smaller. In this case, the access network device may send the third AI model (or parameter information of the third AI model) to the UE. In this way, the transmission overheads can also be reduced. After receiving the third AI model, the UE may directly apply the third AI model. It may be understood that the UE applies the third AI model as the first AI model. Model quantization means that if the parameter information of the first AI model is, for example, a floating point number, the access network device may quantize the parameter information of the first AI model, and may send an obtained quantization parameter to the UE. In this way, the transmission overheads can also be reduced.

A process of training the network model, a process of obtaining the information about the first AI model by the UE, and a process of determining a used first AI model by the UE may occur before S404 or S401.

The foregoing describes an online training manner of the model, that is, the first AI model and the second AI model are obtained in the online training manner. Alternatively, the first AI model and the second AI model may be obtained in an offline training manner. If the offline training manner is used, an agreement may be made in a protocol. For example, the protocol may provide parameters such as network structures and/or weights of one or more groups of models (where each group of models includes one first AI model and one second AI model). Both the UE and the access network device can implement these models according to a protocol.

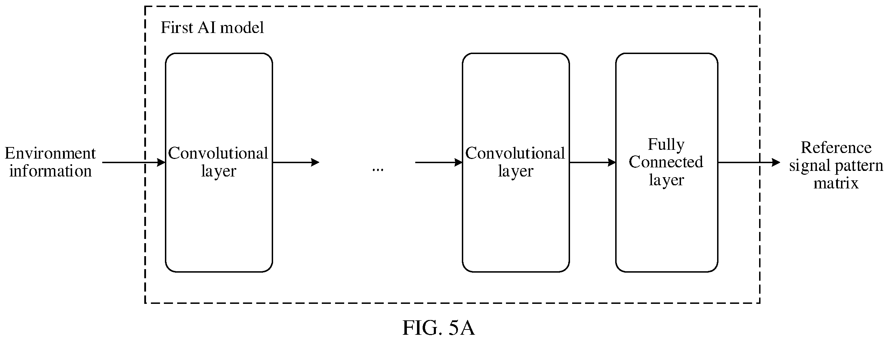

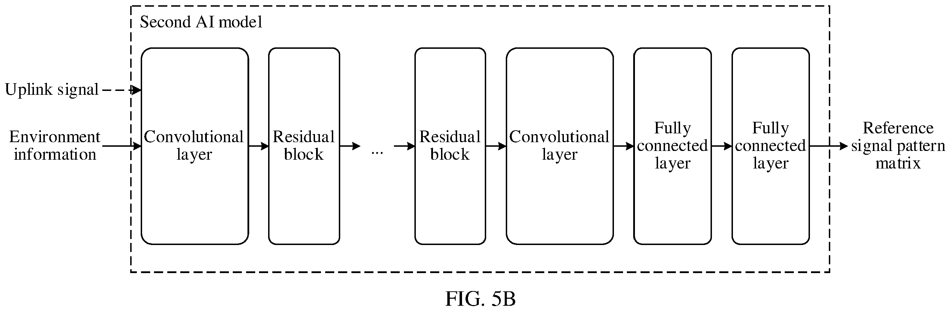

For one group of models, a structure of an included first AI model may be the same as or different from a structure of an included second AI model. Optionally, for a structure of a first AI model, refer to FIG. 5A; and for a structure of a second AI model, refer to FIG. 5B. FIG. 5A and FIG. 5B use an example in which structures of the first AI model and the second AI model are different. In FIG. 5A, the first AI model includes a convolutional layer (convolutional layer) and a fully connected layer (fully connected layer). Input information of the first AI model may include channel environment information, and output information is, for example, a reference signal pattern, for example, a reference signal pattern matrix. In FIG. 5B, the second AI model may include a convolutional layer, a residual block (residual block), and a fully connected layer. Input information of the second AI model may include channel environment information, and optionally, may further include an uplink signal received by the access network device. Output information of the second AI model is, for example, decoding information obtained by decoding the uplink signal, or a reference signal pattern matrix. In FIG. 5B, an example in which the second AI model outputs the reference signal pattern matrix is used. In FIG. 5A and FIG. 5B, a quantity of layers included in a model and the like are examples. The output information of the second AI model in FIG. 5B and the decoding information obtained by decoding the uplink signal received by the access network device are obtained by decoding the uplink signal based on the reference signal pattern matrix obtained based on the channel environment information.

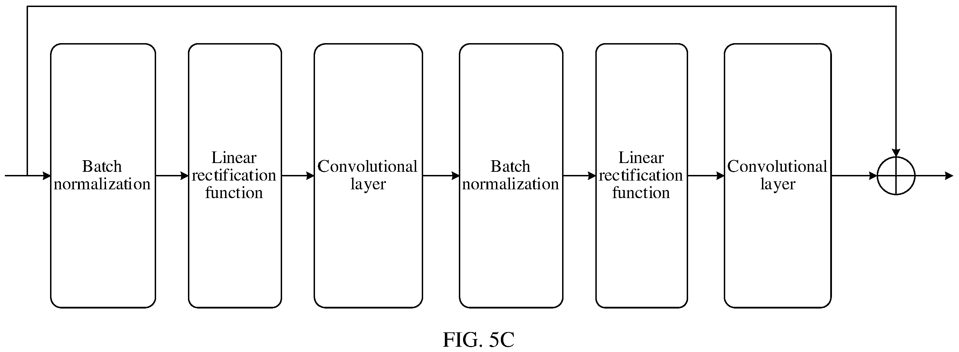

FIG. 5C is a diagram of a residual module. The residual module may include batch normalization (batch normalization, batch norm), a rectified linear unit (rectified linear unit, ReLu), and a convolutional layer. A circle in FIG. 5C indicates element-wise addition (element-wise addition).

In FIG. 5A to FIG. 5C, the convolutional layer may include several convolution units, and a parameter of each convolution unit may be optimized by using a backpropagation algorithm. The convolutional layer can extract different features of input information. A single convolutional layer can extract some relatively low-level features, for example, one or more of features such as edge information, line information, and corner information. A plurality of convolutional layers can extract more complex features from the low-level features in a manner such as iteration.

The fully connected layer is mainly used to integrate local information with category differentiation in the convolutional layer, and map a learned feature to sample label space.

The residual module can help a network better fit a classification function to obtain higher classification precision, and can help resolve a problem in training optimization when a quantity of layers of the network increases.

Batch norm can accelerate a convergence speed of network training, resolve factors such as gradient explosion that may cause training failures, and improve model precision.

ReLu, also referred to as a rectified linear unit, is a common activation function (activation function) in a neural network, and usually refers to a non-linear function represented by a slope function and a variant thereof.

In this disclosure, an input dimension of the first AI model may be related to a dimension of the channel environment information collected by the UE. For example, the input dimension of the first AI model is equal to a dimension of the channel environment information to be input into the first AI model. For example, if it is specified that the input information of the first AI model is a preprocessing result, the input dimension of the first AI model is the same as a dimension of the preprocessing result.

Optionally, if the channel environment information input by the UE into the first AI model includes information about a downlink channel (for example, the first channel environment information includes the information about the downlink channel), dimensions of one piece of sub information included in the first channel environment information are, for example, $N_{tx} * N_{rx} * N_{time} * N_{freq}$, and dimensions of the first channel environment information are, for example, $N_{sample} * N_{tx} * N_{rx} * N_{time} * N_{freq}$, and input dimensions of the first AI model are also $N_{sample} * N_{tx} * N_{rx} * N_{time} * N_{freq}$. If the first channel environment information is obtained by splicing a plurality of pieces of sub information, $N_{sample}$ indicates a quantity of pieces of sub information included in the first channel environment information. If the first channel environment information is obtained by averaging or performing weighted combination on a plurality of pieces of channel environment information, $N_{sample} = 1$, where $N_{tx}$ indicates a quantity of transmit antenna ports of a transmit end (for example, the access network device) of the first downlink reference signal, $N_{rx}$ indicates a quantity of receive antenna ports of a receive end (for example, the UE) of the first downlink reference signal, $N_{time}$ indicates a quantity of slots or a quantity of OFDM symbols occupied by a downlink channel, and $N_{freq}$ indicates a quantity of subcarriers, a quantity of sub-bands, or a quantity of RBs occupied by a downlink channel. Optionally, $N_{tx}$ and $N_{rx}$ may be correspondingly replaced with a quantity of transmit antennas and a quantity of receive antennas respectively.

The first parameter output by the first AI model is used by the UE to obtain the first uplink reference signal, and the first uplink reference signal is used to determine the first uplink signal. A transmission resource of the first uplink signal is scheduled by the access network device. An output dimension of the first AI model may be determined based on a dimension of the transmission resource. The dimension of the transmission resource includes, for example, dimensions of the transmission resource in time domain and frequency domain. For example, if the dimensions of the transmission resource are 42* 12, the output dimensions of the first AI model may also be 42*12, where 42 is obtained based on 14*3, 14 is a quantity of OFDM symbols included in one slot, 3 refers to 3 slots in total, and 12 refers to 12 subcarriers included in one RB. The transmission resource may include a time domain resource and a frequency domain resource. For example, the transmission resource is referred to as a first resource.

The first parameter may include a parameter indicating a distribution status of the first uplink reference signal on the first resource. For example, the first parameter output by the first AI model may be a reference signal pattern matrix, and a dimension of the reference signal pattern matrix is a dimension of the first resource. For example, elements of the reference signal pattern matrix may include {0, 1}. Each element in the reference signal pattern matrix indicates a sub resource in the first resource. If an element is "0", it indicates that the sub resource carries one or more of a service signal or a control signal (or carries a data symbol obtained by modulating one or more of a service signal or a control signal). If an element is " 1", it indicates that the sub resource carries the first uplink reference signal (or carries a first uplink reference signal symbol obtained by modulating the first uplink reference signal). It can be understood that, in this disclosure, the first uplink reference signal is an uplink reference signal corresponding to the first resource used to send the first uplink signal, and may correspond to one or more base sequences used to generate the uplink reference signal.

For example, a transmission bandwidth of the first resource is M RBs, and a quantity of first uplink reference signals that can be allocated is $N_p$ (where in this disclosure, the quantity of first uplink reference signals may be configured by the access network device or predefined by a protocol, or may not be preconfigured, but is determined by the UE, for example, is determined by using the first AI model), and a total quantity of time-frequency resources that can be allocated is 12 * 14 * M. The reference signal pattern matrix output by the first AI model is a matrix that includes elements {0, 1} and whose dimensions are (12 * M) * 14. On the premise that the quantity of resource elements (resource element, RE) occupied by the first uplink reference signal is determined, a sum of all elements of the reference signal pattern matrix is $N_p$. For example, in the reference signal pattern matrix, a submatrix corresponding to one RB is as follows:

$$\begin{bmatrix} 0&0&0&1&0&0&0&0&0&0&0&0&0&0 \\ 0&0&0&0&0&0&0&0&0&0&0&0&0&1 \\ 0&0&0&0&0&0&0&0&1&0&0&0&0&0 \\ 0&0&0&1&0&0&0&0&0&0&0&0&0&0 \\ 0&0&0&0&0&0&0&0&0&0&0&0&0&0 \\ 0&0&0&0&0&0&0&0&0&1&0&0&0 \\ 1&0&0&0&0&1&0&0&0&0&0&0&0 \\ 0&0&0&0&0&0&0&0&0&0&0&0&0&0 \\ 0&0&0&0&0&0&0&0&0&1&0&0&0 \\ 0&0&1&0&0&0&0&0&0&0&0&0&0 \\ 0&0&0&0&0&0&1&0&0&0&0&0&1&0 \\ 0&0&1&0&0&0&0&0&0&0&0&0&0 \end{bmatrix}$$

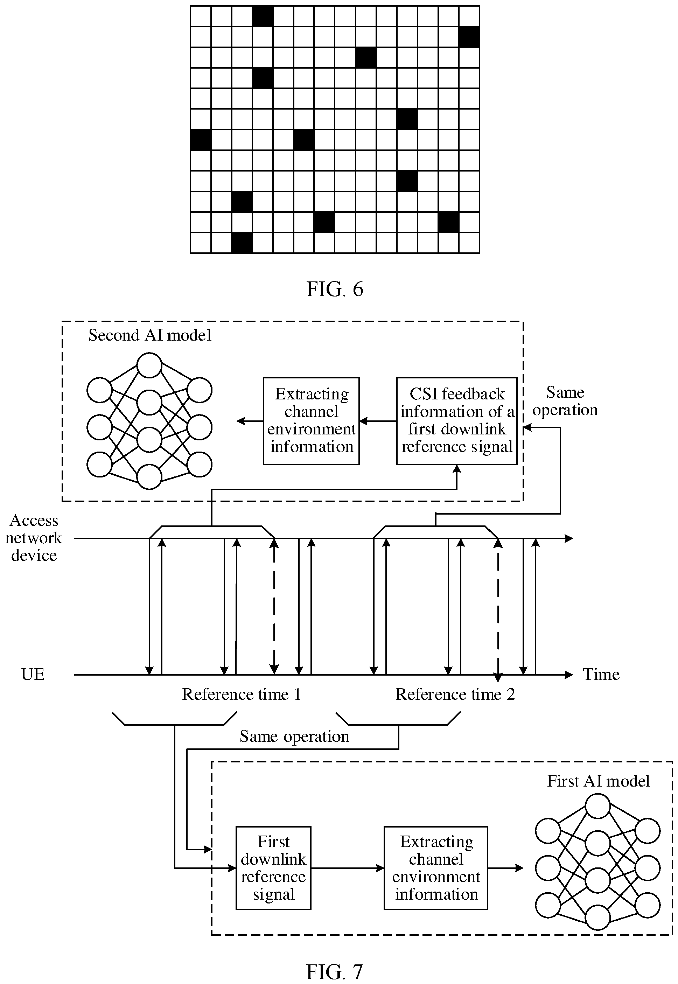

One element in the submatrix corresponds to one RE in the RB. For a distribution status of the first uplink reference signal corresponding to the submatrix, refer to FIG. 6. In FIG. 6, a black box indicates an RE carrying the first uplink reference signal, and a blank box indicates an RE carrying a data signal.

After obtaining the reference signal pattern matrix, the UE may perform resource mapping. For example, the first uplink reference signal is mapped on an RE corresponding to a location of the element "1" in the reference signal pattern matrix, and a data symbol encoded and modulated in a conventional manner is mapped on an RE corresponding to a location of the element "0" in the reference signal pattern matrix. The modulated data symbol corresponds to one or more of a service signal or a control signal in the first uplink reference signal. For example, M = 8. In this case, a total of 12 * 8 = 96 first uplink reference signals may be mapped on an RE corresponding to the location of the element "1", and a total of 96 * 14 - 96 = 1248 data symbols may be mapped on an RE corresponding to the location of the element "0".

In the foregoing process of inducing the first parameter, an example in which the first uplink reference signal and the modulated data symbol do not reuse a resource is used, in other words, one RE is not used to transmit both the first uplink reference signal and the modulated data symbol. In another implementation, the first uplink reference signal and the modulated data symbol may reuse a resource. For example, one RE may be used to transmit both the first uplink reference signal and the modulated data symbol. In this case, the first parameter may include a parameter indicating a power allocation ratio of the first uplink reference signal in the first resource. It may be understood that the first parameter includes the parameter indicating the distribution status of the first uplink reference signal in the first resource, and/or includes the parameter indicating the power allocation ratio of the first uplink reference signal in the first resource. For example, the first parameter output by the first AI model may still be a reference signal pattern matrix, and a dimension of the reference signal pattern matrix is the dimension of the first resource. A difference from the foregoing description is that an element in the reference signal pattern matrix is a real number.

For example, if the first uplink reference signal and the modulated data symbol reuse the resource, one RE may carry both the modulated data symbol and the first uplink reference signal. In this case, it is considered that power normalization still needs to be ensured, a signal that may be transmitted on an $i^{th}$ subcarrier and a $k^{th}$ OFDM symbol included in the first resource may be expressed as:

$$X_{i,k} = \sqrt{(1 - \beta_{i,k})}S_{i,k} + \sqrt{\beta_{i,k}}P_{i,k} \qquad \text{(Formula 1)}$$

In the formula 1, $S_{i,k}$ indicates a modulated data symbol carried on the $i^{th}$ subcarrier and the $k^{th}$ OFDM symbol, $\beta_{i,k} \in [0,1]$ indicates a power allocation coefficient, that is, on the $i^{th}$ subcarrier and the $k^{th}$ OFDM symbol, $\sqrt{(1 - \beta_{i,k})}$ of power is allocated the modulated data symbol, and $\sqrt{\beta_{i,k}}$ of power is allocated to the first uplink reference signal. $(\sqrt{(1 - \beta_{i,k})})^2 + \sqrt{\beta_{i,k}}^2 = 1$. $P_{i,k}$ indicates the first uplink reference signal carried on the $i^{th}$ subcarrier and the $k^{th}$ OFDM symbol. In the formula 1, if $\beta_{i,k} = 0$, it indicates that the RE carries the modulated data symbol; if $\beta_{i,k} = 1$, it indicates that the RE carries the first uplink reference signal; or if $\beta_{i,k}$ is a decimal between 0 and 1, it indicates that the RE carries both the modulated data symbol and the first uplink reference signal. The formula 1 may also be rewritten into a matrix form, and indicates a signal finally carried in a single RB:

$$X = \sqrt{(1 - \beta)} \circ S + \sqrt{\beta} \circ P \qquad \text{(Formula 2)}$$

In the formula 2, $X$, $S$, $\beta$, and $P$ each indicate a matrix. $\circ$ indicates a corresponding element product, $S$ indicates the modulated data symbol carried on the single RB, and $P$ indicates the first uplink reference signal carried on the single RB. $\beta \in [0,1]$ indicates a power allocation coefficient, that is, on the single RB, $\sqrt{(1 - \beta)}$ of power is allocated to the modulated data signal, and $\sqrt{\beta}$ of power is allocated to the first uplink reference signal. Both $\sqrt{(1 - \beta)}$ and $\sqrt{\beta}$ indicate to calculate a square root of an element included in a matrix. For example, each element included in a matrix β is subtracted from 1 to obtain a matrix (namely, a matrix (1 - β)) whose dimension remains unchanged. A square root of each element in the matrix whose dimension remains unchanged is calculated to obtain a matrix $\sqrt{(1 - \beta)}$. That is, the matrix $\sqrt{(1 - \beta)}$ does not mean to calculate a square root of the matrix (1 - β), but to calculate a square root of each element included in the matrix (1 - β). The same applies to the matrix $\sqrt{\beta}$. As can be learned, if a resource is reused, the reference signal pattern matrix output by the first AI model may indicate the power allocation ratio of the first uplink reference signal in the first resource. In this case, the reference signal pattern matrix may be considered as a matrix $\beta$. For example, a submatrix that is output by the first AI model, that is included in the matrix $\beta$, and that corresponds to one RB is as follows:

$$\beta^{RB} = \begin{bmatrix} 0.11 & 0.53 & 0.57 & 1.00 & 0.85 & 0.66 & 0.95 & 0.52 & 0.22 & 0.15 & 0.86 & 0.63 & 0.25 & 0.89 & 1.00 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \\ 0 & 0 & 0 & 0 & 0 & 0 & 0 & 0 & 0 & 0 & 0 & 0 & 0 & 0 & 0 \end{bmatrix}$$

One element in the foregoing submatrix corresponds to one RE in the RB. In the submatrix, only possible element values in the first row are listed, and element values in other rows are not provided yet and are replaced with 0. For example, the element 0.11 in the first row and the first column indicates that both the first uplink reference signal and the modulated data symbol are carried on an RE corresponding to the element, and a power allocation ratio of the first uplink reference signal is 0.11.

The foregoing submatrix includes elements corresponding to single RBs in the matrix $\beta$. The foregoing submatrix may be expressed as:

$$\beta_z \in R^{N_{freq}*N_{time}} \qquad \text{(Formula 3)}$$

$\beta_z$ indicates the submatrix, $N_{time}$ indicates a quantity of slots or a quantity of OFDM symbols occupied by a downlink channel, and $N_{freq}$ indicates a quantity of subcarriers, a quantity of sub-bands, or a quantity of RBs occupied by the downlink channel. If $\beta_{i,j}$ indicates an element in an $i^{th}$ row and a $j^{th}$ column of the submatrix indicated in the formula 3, the following formula is met:

$$\beta_{i,j} \in [0,1], \forall i, j \qquad \text{(Formula 4)}$$

In the formula 4, $\forall$ indicates a quantization symbol.

Optionally, the reference signal pattern matrix (or the matrix $\beta$) may be a subband-level matrix, to be specific, every M RBs may use one matrix $\beta$. Alternatively, the matrix $\beta$ may be a full-band-level matrix, to be specific, one matrix $\beta$ is used on an entire bandwidth. The difference between the two matrices is a granularity of $N_{freq}$.

S405: The UE sends a first uplink signal. Correspondingly, the access network device receives the first uplink signal from the UE. The first uplink signal is obtained based on uplink data. "Data" in this disclosure may include control information or service information. Therefore, the first uplink signal may include one or more of a control signal or a service signal. In addition, the first uplink signal further includes a first uplink reference signal. For example, the UE sends the first uplink signal to the access network device on the first resource based on the first information.

After obtaining the first information output by the first AI model, the UE determines the pattern of the first uplink reference signal, so that the UE can map the first uplink reference signal to the first resource based on the pattern of the first uplink reference signal. In addition, the UE also maps one or more of the control signal or the service signal to the first resource based on the pattern of the first uplink reference signal. In this way, the first uplink signal is obtained. The UE may send the first uplink signal by using the first resource.

A signal (for example, the first uplink signal) received by the access network device is, for example, expressed as $Y = HX + K$. $Y$ indicates a signal received by the access network device or indicates a received signal matrix. $X$ indicates a signal transmission matrix, and $X$ is a matrix formed by a modulated data symbol and the first uplink reference signal based on the reference signal pattern matrix. $H$ indicates a radio channel matrix. $K$ indicates a noise matrix. Dimensions of matrices such as $Y$, $X$, $H$, and $K$ are related to one or more of the following: a dimension of the first resource, a quantity of transmit antennas of the access network device, or a quantity of receive antennas of the UE. The transmit antenna of the access network device herein is a physical transmit antenna of the access network device, and the receive antenna of the UE is a physical receive antenna of the UE. Optionally, the quantity of transmit antennas and the quantity of receive antennas may alternatively be respectively replaced with a quantity of transmit antenna ports and a quantity of receive antenna ports.

S406: The access network device obtains second channel environment information based on second information. S406 may occur at any location after S401, for example, occurs before S402, occurs at the same time as S402, occurs after S402, occurs after S403, occurs after S404, or occurs after S405. The second channel environment information may represent a current status of a downlink channel.

The second AI model corresponding to the first AI model is deployed on an access network device side. The second AI model also uses channel environment information as an input to obtain a parameter of the first uplink reference signal, so that the access network device can perform processing such as demodulation on the first uplink signal from the UE based on the parameter of the first uplink reference signal. Therefore, the access network device also obtains the channel environment information. For example, the channel environment information obtained by the access network device is referred to as the second channel environment information.

This disclosure may further include S407: The access network device obtains a first manner. For example, the access network device may configure the first manner autonomously, or obtain the first manner in a manner predefined by using a protocol. S407 may occur at any location before S406, for example, occur before S406 or before S405. After obtaining the first manner, the access network device may determine the second information in the first manner, and then obtain the second channel environment information based on the second information. Alternatively, it is understood that the access network device may obtain the second channel environment information based on the first manner. Both the access network device and the UE may obtain the channel environment information in the first manner. In this way, the first channel environment information obtained by the UE can match the second channel environment information obtained by the access network device, so that the access network device can correctly process the uplink signal from the UE.

Optionally, the second information may include second CSI feedback information from the UE, and the access network device may obtain the second channel environment information based on the second CSI feedback information from the UE. The second CSI feedback information is obtained by the UE by measuring the first downlink reference signal from the access network device. The access network device may extract one piece of channel environment information from one piece of CSI feedback information. For example, the channel environment information is referred to as sub information. If the second CSI feedback information includes a plurality of pieces of CSI feedback information, the access network device may extract a plurality of pieces of sub information from the plurality of pieces of CSI feedback information. The second channel environment information may be obtained based on one piece of sub information or a plurality of pieces of sub information.

Alternatively, the second information may include a second uplink reference signal from the UE, and the access network device may obtain the second channel environment information based on the second uplink reference signal. The access network device may extract one piece of channel environment information from one second uplink reference signal. For example, the channel environment information is referred to as sub information. If the second information includes a plurality of second uplink reference signals, the access network device may extract a plurality of pieces of sub information from the plurality of second uplink reference signals. The second channel environment information may be obtained based on one piece of sub information or a plurality of pieces of sub information. Optionally, the second uplink reference signal is, for example, an SRS, and the UE generally periodically sends the SRS, so that the access network device can extract the second channel environment information by using the received SRS. For detailed content included in the second information, refer to the foregoing description of the first manner. In addition, for a correspondence between the second uplink reference signal and the first downlink reference signal, refer to the foregoing description.

Refer to FIG. 7. An example in which an access network device obtains second channel environment information by using CSI feedback information is used. It can be learned from FIG. 7 that the access network device may send a first downlink reference signal, and each time UE receives one first downlink reference signal, the UE may perform measurement to obtain one piece of CSI feedback information, and send the CSI feedback information to the access network device. In FIG. 7, a transmission delay between the access network device and the UE is ignored. A reference time shown by a dashed line with double arrows in FIG. 7 is, for example, a second reference time corresponding to a quantity manner or a first reference time corresponding to a time window manner. After receiving the CSI feedback information, the access network device may extract the second channel environment information from the CSI feedback information, and may input the second channel environment information into a second AI model to process an uplink signal from the UE and so on. In addition, as time goes by, the UE and the access network device may obtain channel environment information for a plurality of times. In this case, there may be a plurality of reference times. For example, FIG. 7 includes a reference time 1 and a reference time 2. A "same operation" on a UE side in FIG. 7 means that the UE may perform a process in this disclosure for a plurality of times. For example, the UE may periodically determine the first downlink reference signal, extract the channel environment information based on the first downlink reference signal, and then input the channel environment information into a first AI model. A "same operation" on an access network device side means that the access network device may perform a process in this disclosure for a plurality of times. For example, the access network device may periodically determine the first downlink reference signal, extract the channel environment information based on a measurement report of the first downlink reference signal, and then input the channel environment information into the second AI model. The UE side corresponds to the access network device side. For example, the UE and the access network device follow a same periodicity.

Optionally, in this disclosure, the second channel environment information may include information about a downlink channel, change information of a downlink channel in time domain and/or frequency domain, receive power information of the first downlink reference signal, or preprocessing information. For content of the foregoing information, refer to the description of the first channel environment information in S402. In addition, as described above, the first channel environment information may be obtained based on one piece of sub information or a plurality of pieces of sub information. In the two cases, for how the access network device obtains the second channel environment information, refer to the description of obtaining the first channel environment information by the UE in S402.

The UE obtains the first channel environment information based on the first downlink reference signal, and the access network device obtains the second channel environment information based on second information (for example, a measurement report or a second uplink reference signal) related to the first downlink reference signal. Therefore, the first channel environment information can match the second channel environment information.

S408: The access network device obtains recovery information of the first uplink signal based on the second channel environment information and the first uplink signal, for example, a decoding result of the first uplink signal.

In an optional implementation of S408, the access network device may input the second channel environment information and the first uplink signal into the second AI model to obtain information output by the second AI model. The information output by the second AI model is the recovery information of the first uplink signal.

For example, the second AI model may obtain a second parameter based on the second channel environment information. The second parameter is, for example, a parameter of the first uplink reference signal, and may also be referred to as the second parameter. Because the first channel environment information matches the second channel environment information, ideally, a first parameter obtained by the first AI model should be the same as the second parameter obtained by the second AI model. For example, the second parameter may include a parameter indicating a distribution status of the first uplink reference signal in a first resource, and/or include a parameter indicating a power allocation ratio of the first uplink reference signal in a first resource. For example, both the first parameter and the second parameter are reference signal pattern matrices. In this case, ideally, the two reference signal pattern matrices may be same matrices. The second AI model may perform, based on the second parameter, processing such as demodulation and decoding on one or more of a service signal or a control signal included in the first uplink signal, so that the second AI model can output the recovery information of the first uplink signal. The recovery information of the first uplink signal includes, for example, a decoding result (or referred to as a decoding bit) of the first uplink signal. This is equivalent to that the decoding result of the first uplink signal is directly obtained by using the second AI model, and the access network device does not need to perform processing such as decoding, thereby simplifying a processing process of the access network device.

Alternatively, in another optional implementation of S408, the access network device also inputs the second channel environment information into the second AI model to obtain a second parameter. Then, the access network device processes the first uplink signal based on the second parameter to obtain the recovery information of the first uplink signal. That is, the second AI model may alternatively completely correspond to the first AI model, and is only used to obtain a parameter (for example, the second parameter) of the first uplink reference signal. Processing such as demodulation and decoding performed on one or more of the service signal or the control signal based on the parameter of the first uplink reference signal may be performed by the access network device. Such a manner can simply a structure of the second AI model, so that the first AI model better matches the second AI model.

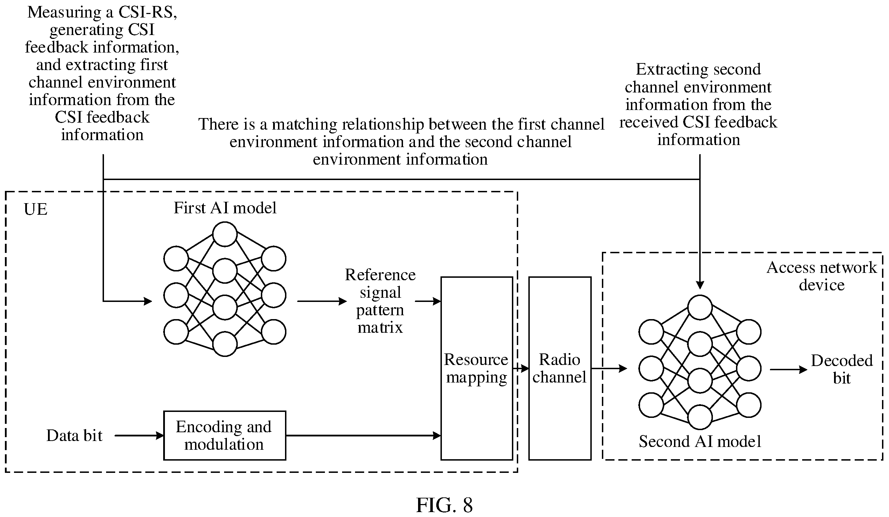

FIG. 8 is a diagram of the embodiment shown in FIG. 4. It can be learned from FIG. 8 that UE generates CSI feedback information based on a CSI-RS from an access network device, extracts first channel environment information from the CSI feedback information, and then inputs the first channel environment information into a first AI model to obtain a reference signal pattern matrix. The UE maps a DMRS to a first resource based on the reference signal pattern matrix. In addition, the UE further performs processing such as encoding and modulation on an original data bit, and then maps a modulated data symbol to the first resource. In this way, a first uplink signal is obtained. The UE sends the first uplink signal by using a radio channel between the UE and the access network device. The access network device may input the received first uplink signal and second channel environment information into a second AI model (where the access network device obtains the second channel environment information based on the CSI feedback information from the UE) to obtain a decoded bit output by the second AI model. It can be understood that, in this disclosure, similar to an access network device side, the first AI model on a UE side can also include an encoding and modulation process. In this way, the first channel environment information not only may be used to determine a reference signal pattern matrix, but also may be used to determine an encoding and modulation scheme.

In this disclosure, the UE may obtain the first channel environment information, and obtain the parameter of the first uplink reference signal based on the first channel environment information, and the parameter of the first uplink reference signal may be used for to-be-sent uplink data to obtain the first uplink signal. The first channel environment information reflects, for example, a current channel environment. The first uplink signal obtained based on the first channel environment information is an uplink signal obtained with the current channel environment considered. Therefore, the first uplink signal has strong environment adaptability, thereby helping improve transmission quality and a transmission success rate of the first uplink signal. In addition, in this disclosure, a plurality of patterns of the first uplink reference signal do not need to be generated in advance. Therefore, the plurality of patterns do not need to be stored, thereby helping save storage space. In addition, because a plurality of patterns do not need to be generated, the access network device does not need to send a plurality of patterns to the UE, thereby helping reduce transmission overheads. In addition, both the UE and the access network device obtain channel environment information in the first manner, so that the channel environment information obtained by the UE and the access network device can adapt to each other. Therefore, the access network device can correctly process the uplink signal from the UE. In such a manner, the channel environment information or the parameter of the first uplink reference signal does not need to be transmitted between the access network device and the UE, thereby reducing transmission overheads.

In the embodiment shown in FIG. 4, both the first AI model and the second AI model are used to obtain the parameter of the first uplink reference signal. However, in this disclosure, the first AI model and the second AI model may further be used for another purpose, that is, a use or an output of the first AI model and the second AI model may include one or more of a first use or output related to the pattern matrix of the first uplink reference signal and/or demodulation of the first uplink signal described in the foregoing embodiment or a second use or output related to compression/decompression or encoding/decoding of the first uplink signal described in the following embodiments. It can be understood that the first AI model and the second AI model each may include a plurality of AI models. For example, when the first AI model and the second AI model have the first use or output and the second use or output, the first AI model and the second AI model each may include an AI model used to implement the first use or output related to the pattern matrix of the first uplink reference signal and/or demodulation of the first uplink signal and an AI model used to implement the second use or output related to compression/decompression or encoding/decoding of the first uplink signal. A use or an output related to compression/-

decompression or encoding/decoding of the first uplink signal is described below.

A channel state information (channel state information, CSI) feedback is one of important functions in a multiple-input multiple-output (multiple-input multiple-output, MIMO) system. CSI can represent information about a downlink channel matrix. After the UE feeds back the CSI to the access network device, the access network device may recover information about a downlink channel based on the CSI to determine information such as a precoding matrix based on the information about the downlink channel. Higher precision of the CSI fed back by the UE indicates more information of the downlink channel matrix, more accurate information about the downlink channel that can be recovered by the access network based on the CSI, a more accurate precoding matrix determined by the access network device, better downlink spatial multiplexing performance, a higher received signal to interference plus noise ratio of the UE, and a higher system throughput rate. Alternatively, after the UE feeds back the CSI to the access network device, the access network device may not need to recover information about a downlink channel, but determine information such as a precoding matrix based on the CSI. In this case, higher precision of the CSI indicates a more accurate precoding matrix determined by the access network device.

Main steps of feeding back the CSI include: The UE measures a downlink reference signal, compresses and quantizes a measurement result (or referred to as CSI feedback information or a measurement report, for example, the CSI feedback information or the measurement report in the embodiment shown in FIG. 4) into a feedback bit, and then sends the feedback bit to the access network device. The access network device may recover the CSI based on the received feedback bit. The CSI may be fed back by using a dual-ended AI model based on an auto-encoder (auto-encoder). To be specific, the UE compresses and quantizes the CSI by using an encoder (encoder) model to obtain a feedback bit. The access network device recovers the CSI by using a decoder (decoder) model matching the encoder.

For example, at least one reference network may be trained in advance, each reference network includes an encoder model (or referred to as an encoder network) and a corresponding decoder model (or referred to as a decoder network), and each reference network is applicable to a communication scenario, for example, a channel environment. For example, different reference networks may be trained by using different training datasets, one training dataset may include one or more pieces of training data, and one training dataset may correspond to one communication scenario, for example, correspond to one channel environment. In this case, different reference networks obtained through training are applicable to different channel environments. For example, a reference network is trained for a clustered delay line (clustered delay line, CDL)-A channel model, and different reference networks may be trained for different CDL-A models. For example, one reference network is obtained through training for a CDL-A30 channel model, and another reference network is obtained through training for a CDL-A300 channel model.

The encoder model and the decoder model may be jointly trained, for example, may be trained by the access network device or a third-party device (for example, an AI network element). Details are not described herein.

If the third-party device trains the reference network, the third-party device may send, to the access network device, information about all reference networks obtained through training. Alternatively, if the access network device trains the reference network, the third-party device does not need to send information about the reference network to the access network device. After obtaining the information about the reference network, the access network device may send the information about the reference network to the UE. For example, the access network device may send obtained information about all encoder models included in the reference network to the UE. When sending the information about the encoder models to the UE, the access network device may also use a manner such as model pruning, model distillation, or model quantization. Details are not described herein.

It can be learned that at least one encoder model may be deployed on a UE side, and at least one corresponding decoder model may be deployed on an access network device side. After measuring a downlink reference signal to obtain a measurement result, the UE may separately input the measurement result into at least one encoder model. Each encoder model may output one encoding result. Therefore, the UE may obtain at least one encoding result. If a quantity of the at least one coding result is greater than 1, the UE usually selects one of the at least one coding result for sending to the access network device. The encoding result selected in this way corresponds only to an application scenario of an encoder model outputting the encoding result, and does not necessarily completely comply with a current scenario. Consequently, the access network device may fail to accurately recover the CSI.

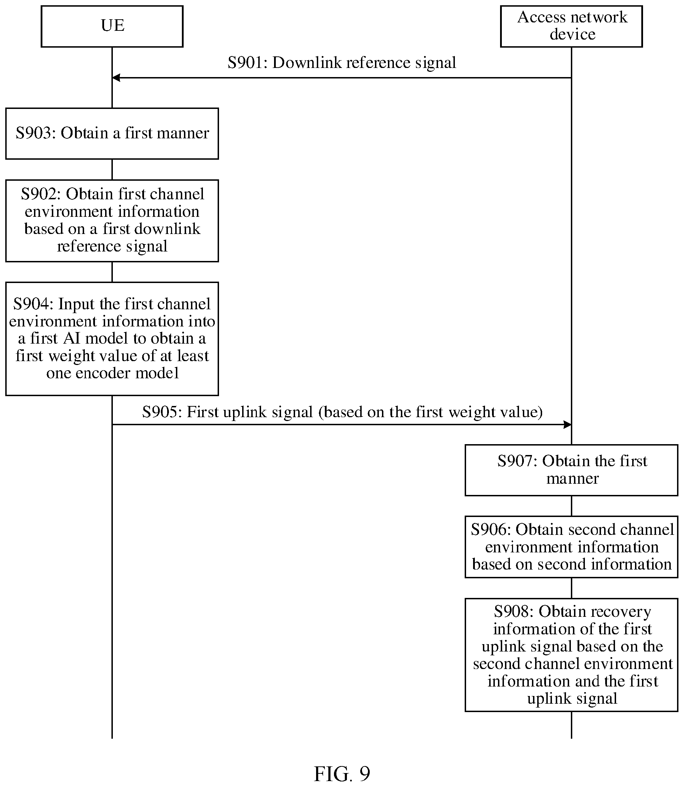

In view of this, this disclosure provides a second uplink signal sending and receiving method. In this method, if UE has obtained a plurality of encoding results, the UE may obtain a final encoding result based on the plurality of encoding results. Such an encoding result can better adapt to a current communication scenario, so that an access network device can obtain more accurate CSI through recovery. FIG. 9 is a flowchart of the method.

S901: An access network device sends a downlink reference signal. Correspondingly, UE receives the downlink reference signal from the access network device.

For more content of S901, refer to S401 in the embodiment shown in FIG. 4.

S902: The UE obtains first channel environment information based on a first downlink reference signal.

This disclosure further includes S903: The UE obtains a first manner. S903 may occur before S902 or S901.

For more content of S902, refer to S402 in the embodiment shown in FIG. 4.

S904: The UE inputs the first channel environment information into a first AI model to obtain first information. In this disclosure, the first information may include a first parameter, and the first parameter indicates, for example, a weight value corresponding to at least one encoder model. For example, the weight value indicated by the first parameter is referred to as a first weight value. For example, the first weight value may include one or more weight values, and the one or more weight values included in the first weight value may be in one-to-one correspondence with encoder models.

After obtaining the first channel environment information, the UE may input the first channel environment information into the first AI model. The first AI model may determine the first parameter based on the first channel environment information, so that the UE can obtain the first parameter output by the first AI model. For content such as AI model training, a model structure, and how the UE obtains the first AI model, refer to S404 in the embodiment shown in FIG. 4.

The first AI model may determine a current channel environment based on the first channel environment information. The first AI model also learns, in advance, of a channel environment corresponding to each of the at least one encoder model. In this case, a manner in which the first AI model determines the first weight value is that a smaller difference between a channel environment corresponding to an encoder model and a current channel environment indicates a larger weight value corresponding to the encoder model, and a larger difference between a channel environment corresponding to an encoder model and a current channel environment indicates a smaller weight value corresponding to the encoder model. For example, a quantity of the at least one encoder model is 2, that is, a quantity of reference networks is 2, for example, a reference network A and a reference network B. For example, when the reference network is trained, the reference network A is obtained through training for the CDL-A30 channel model, and the reference network B is obtained through training for the CDL-A300 channel model. The first AI model determines, based on the first channel environment information, that the current channel environment is a CDL-A200. A difference between the channel environment and a channel environment corresponding to the CDL-A300 channel model is relatively small, and a difference between the channel environment and a channel environment corresponding to the CDL-A30 channel model is relatively large. Therefore, a weight value included in the first weight value and a weight value of an encoder model included in the reference network A are smaller, and a weight value included in the first weight value and a weight value of an encoder model included in the reference network B are larger. It may be understood that in this disclosure, the at least one encoder model is determined, by using the first parameter, as an encoder model matching the current channel environment, so that an uplink signal can better match the current channel environment without training too many encoder models.

Optionally, the UE may obtain a measurement report based on the downlink reference signal received in S901. The UE may separately input the measurement report into at least one encoder model. One encoder model may compress the input measurement report and output a compressed bit, and the at least one encoder model may output at least one compressed bit. The downlink reference signal used to obtain the measurement report is, for example, the first downlink reference signal, or the downlink reference signal used to obtain the measurement report further includes another downlink reference signal in addition to the first downlink reference signal. The UE may separately input all or some obtained measurement reports into the at least one encoder model, or the UE may preprocess all or some obtained measurement reports, and separately input a preprocessing result into the at least one encoder model. A preprocessing manner includes, for example, combining a plurality of measurement reports, calculating an average value of a plurality of measurement reports, or performing weighted combination on a plurality of measurement reports.

For example, output information of one encoder model may be a real number vector ($R^{P*1}$) whose length is P, where $P \leq N_{tx} * N_{sb}$. $N_{tx}$ and $N_{sb}$ are explained below. The UE may determine the information about the downlink channel based on measurement of the first downlink reference signal, for example, determine a downlink channel matrix. It is assumed that dimensions of the downlink channel matrix are $N_{tx} * N_{rx} * N_{RB}$. $N_{tx}$ indicates a quantity of transmit antenna ports of a transmit end (for example, the access network device) of the first downlink reference signal, $N_{rx}$ indicates a quantity of receive antenna ports of a receive end (for example, the UE) of the first downlink reference signal, and $N_{RB}$ indicates a quantity of RBs in frequency domain. A quantity of transmit antenna ports of a transmit end (for example, a transmit end of a downlink reference signal or a transmit end of an uplink reference signal) described in embodiments of this disclosure includes a quantity of transmit antenna ports of the transmit end in each polarization direction. A quantity of receive antenna ports of a receive end (for example, a receive end of a downlink reference signal or a receive end of an uplink reference signal) described in embodiments of this disclosure includes a quantity of receive antenna ports of the receive end in each polarization direction. Both the transmit antenna port and the receive antenna port are logical concepts. For example, one physical transmit antenna may include one or more transmit antenna ports, and one physical receive antenna may include one or more receive antenna ports. The UE may perform singular value decomposition (singular value decomposition, SVD) on the downlink channel matrix to obtain characteristic subspace of $N_{tx} * N_{sb}$, where $N_{sb}$ indicates a quantity of frequency domain subbands. For example, $N_{sb} = N_{RB}/a$, where a indicates a frequency domain subband granularity or a subband bandwidth, that is, a quantity of RBs included in each subband. A common frequency domain subband granularity is 1 RB, 2 RBs, or 4 RBs. 4 RBs are used as an example. In this case, $N_{sb} = N_{RB}/4$. Optionally, $N_{tx}$ and $N_{rx}$ may be correspondingly replaced with a quantity of transmit antennas and a quantity of receive antennas respectively.

Optionally, in addition to inputting the first channel environment information into the first AI model, the UE may further input, into the first AI model, the at least one compressed bit output by the at least one encoder model. In this case, the first AI model may determine the first parameter based on the first channel environment information and the at least one compressed bit. Alternatively, in addition to inputting the first channel environment information into the first AI model, the UE may further input the measurement report into the first AI model. In this case, the first AI model may determine the first parameter based on the first channel environment information and the measurement report. Output information of an encoder model may be referred to as a compressed bit, or may be referred to as a first encoding result. First encoding results output by different encoder models are the same or different. The UE inputs the at least one compressed bit (or the measurement report) into the first AI model. In this case, when determining the first parameter, the first AI model can use the at least one compressed bit (or the measurement report) as a consideration factor, so that the first parameter determined by the first AI model is more accurate. Whether the at least one compressed bit (or the measurement report) needs to be input into the first AI model may be configured by the access network device, predefined by using a protocol, or so on.

S905: The UE sends a first uplink signal. Correspondingly, the access network device receives the first uplink signal from the UE.

For example, the UE may send the first uplink signal based on the first weight value. The UE obtains the first weight value in S904. In this case, the UE may process the at least one compressed bit based on the first weight value. For example, if output dimensions of at least one encoder are the same, quantities of bits of at least one compressed bit are equal (or dimensions are the same), and the UE may perform weighted combination on the at least one compressed bit based on the first weight value to obtain information that is the first uplink signal. Alternatively, optionally, the UE may further quantize the at least one compressed bit obtained after the weighted combination, and use information obtained through the quantization as the first uplink signal. After performing processing such as modulation and mapping on the first uplink signal, the UE may send the first uplink signal to the access network device.

Optionally, the first uplink signal may be CSI or a precoding matrix indicator (precoding matrix indicator, PMI), or neither CSI nor a PMI, but may have a function similar to that of the CSI or the PMI. For example, the access network device may determine a precoding matrix based on the first uplink signal.

S906: The access network device obtains second channel environment information based on second information.

This disclosure may further include S907: The access network device obtains a first manner.

For more content of S906, for example, content of the second information and how the access network device obtains the second channel environment information, refer to S406 in the embodiment shown in FIG. 4.

S908: The access network device obtains recovery information of the first uplink signal based on the second channel environment information and the first uplink signal.

In an optional implementation of S908, the access network device may input the second channel environment information and the first uplink signal into a second AI model to obtain information output by the second AI model, and then may obtain the recovery information of the first uplink signal based on the information output by the second AI model.

For example, the second AI model may determine a second parameter based on the second channel environment information (or based on the second channel environment information and the first uplink signal). The second parameter indicates, for example, a weight value of at least one encoder model. The weight value indicated by the second parameter may be referred to as a second weight value. For a manner of obtaining the second weight value by the second AI model, refer to the foregoing description of the manner of obtaining the first weight value by the first AI model. Because the first channel environment information matches the second channel environment information, ideally, the first weight value obtained by the first AI model should be the same as the second weight value obtained by the second AI model. For example, a quantity of weight values included in the first weight value is the same as a quantity of weight values included in the second weight value, the weight values included in the first weight value are in one-to-one correspondence with the weight values included in the second weight value, and two corresponding weight values are equal. For example, a quantity of the at least one encoder model is 3; the first weight value includes a weight value 1 corresponding to an encoder model 1, a weight value 2 corresponding to an encoder model 2, and a weight value 3 corresponding to an encoder model 3; the second weight value includes a weight value 4 corresponding to the encoder model 1, a weight value 5 corresponding to the encoder model 2, and a weight value 6 corresponding to the encoder model 3. In this case, ideally, the weight value 1 = the weight value 4, the weight value 2 = the weight value 5, and the weight value 3 = the weight value 6.

The second AI model may process the first uplink signal based on the second parameter to obtain at least one processing bit, and the second AI model may output the at least one processing bit. For example, the first uplink signal is obtained by performing weighted combination on the at least one compressed bit based on the first weight value. Therefore, processing such as deweighting may be performed on the first uplink signal by using the second weight value. Optionally, because the first uplink signal may be obtained by quantizing the at least one compressed bit obtained after weighted combination, the access network device may first dequantize the first uplink signal, and then input the dequantized first uplink signal into the second AI model, so that the second AI model may process the dequantized first uplink signal based on the second parameter to obtain at least one processing bit. The at least one processing bit is in one-to-one correspondence with the at least one decoder model. The access network device may input the at least one processing bit into the at least one decoder model, so that the at least one decoder model can output at least one decoded bit. Output information of a decoder model may be referred to as a decoded bit, or may be referred to as a first decoding result. First decoding results output by different decoder models are the same or different. The at least one decoded bit may be used as the recovery information of the first uplink signal. Alternatively, the access network device may further obtain the recovery information of the first uplink signal based on the at least one decoded bit. For example, the access network device may add the at least one decoded bit to obtain the recovery information of the first uplink signal.

For example, dimensions of information output by one decoder model are $N'_{tx} * N'_{rx} * N_{RB}$, where $N'_{tx}$ indicates a quantity of transmit antenna ports of a transmit end (for example, the UE) of an uplink signal, $N'_{rx}$ indicates a quantity of receive antenna ports of a receive end (for example, the access network device) of the uplink signal, and $N_{RB}$ indicates a quantity of RBs in frequency domain.

In this manner, the access network device does not need to perform corresponding processing on the first uplink signal based on the second parameter, thereby simplifying a processing process of the access network device.

In another optional implementation of S906, the access network device may input the second channel environment information into the second AI model, to obtain information output by the second AI model. The information output by the second AI model is, for example, the second parameter. Then, the access network device processes the first uplink signal based on the second weight value indicated by the second parameter to obtain the recovery information of the first uplink signal.

The second AI model may determine the second parameter based on the second channel environment information. Alternatively, optionally, in addition to inputting the second channel environment information into the second AI model, the access network device may further input the first uplink signal into the second AI model. In this case, the second AI model may determine the second parameter based on the second channel environment information and the first uplink signal, in other words, the second AI model still outputs the second parameter. For example, if the first AI model determines the first parameter based on the first channel environment information and the at least one compressed bit (or the measurement report), the second AI model may determine the second parameter based on the second channel environment information and the first uplink signal, in other words, operations of the UE and the access network device are as consistent as possible.

The access network device obtains the second parameter output by the second AI model, and may process the first uplink signal based on the second weight value to obtain at least one processing bit. Optionally, because the first uplink signal may be obtained by quantizing the at least one compressed bit obtained after weighted combination, the access network device may first dequantize the first uplink signal, and then process the dequantized first uplink signal based on the second weight value to obtain at least one processing bit. The at least one processing bit is in one-to-one correspondence with the at least one decoder model. The access network device may input the at least one processing bit into the at least one decoder model, so that the at least one decoder model can output at least one decoded bit. The at least one decoded bit may be used as the recovery information of the first uplink signal. Alternatively, the access network device may further obtain the recovery information of the first uplink signal based on the at least one decoded bit. For example, the access network device may add the at least one decoded bit to obtain the recovery information of the first uplink signal.

For example, if there are E reference networks (where each reference network includes one encoder model and a corresponding decoder model), the second weight value may include E weight values, which for example, are expressed as $\alpha_1, \alpha_2, ...,$ and $\alpha_E$, and $\sum_{i=1}^{E} \alpha_i = 1$. For example, $g_i$ indicates an input/output relationship of an $i^{th}$ decoder model in the at least one decoder model. If the first uplink signal (or the dequantized first uplink signal) is expressed as, for example, B, a decoded bit $\widehat{H_i}$ output by the $i^{th}$ decoder model may be expressed as:

$$\widehat{H_i} = g_i(\alpha_i * B) \qquad \text{(Formula 5)}$$

For example, the access network device adds the at least one decoded bit to obtain the recovery information of the first uplink signal. In this case, the finally obtained recovery information $\hat{H}$ of the first uplink signal may be expressed as:

$$\hat{H} = \sum_{i=1}^{E} \widehat{H_i} \qquad \text{(Formula 6)}$$

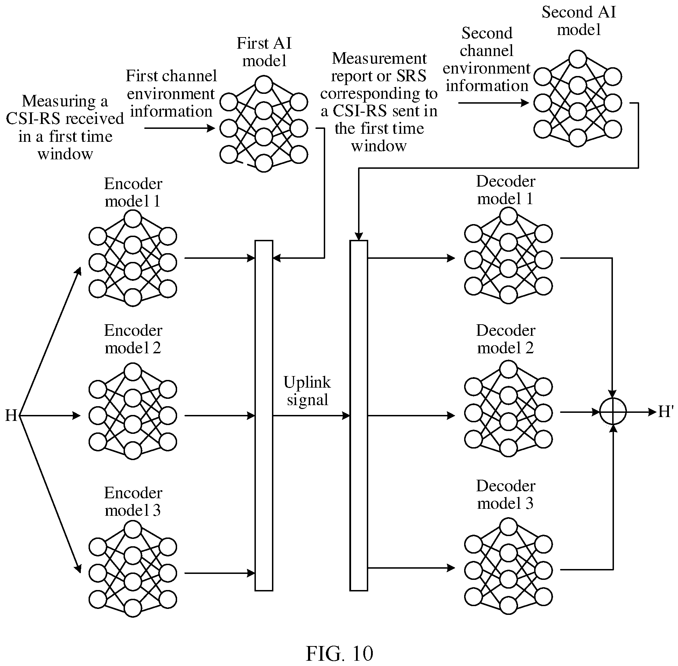

FIG. 10 is a diagram of the embodiment shown in FIG. 9. It can be learned from FIG. 10 that UE may obtain a measurement report by measuring a CSI-RS received in a first time window. The UE extracts first channel environment information based on this, and inputs the first channel environment information into a first AI model. The first AI model may output first parameters corresponding to three encoder models. In addition, the UE further separately inputs the measurement report (for example, expressed as H) into three encoder models to obtain three compressed bits. The UE may obtain a first uplink signal based on a first weight value indicated by the first parameter and the three compressed bits. The UE sends the first uplink signal to an access network device through a radio channel. The access network device may obtain second channel environment information by using the measurement report or an SRS from the UE, and input the second channel environment information into a second AI model. The second AI model may output second parameters corresponding to three decoder models. The access network device may process the received first uplink signal by using the second parameters to obtain at least one processing bit. The access network device inputs the at least one processing bit into the three decoder models to obtain three decoded bits. The access network device may obtain recovery information of the first uplink signal based on the three decoded bits. For example, the recovery information is expressed as H'. A circle and a plus sign in FIG. 10 indicate an addition relationship. In other words, in FIG. 10, an example in which the access network device adds the three decoded bits to obtain the recovery information of the first uplink signal is used.

In this disclosure, a first downlink reference signal used to obtain the first channel environment information is obtained in a first manner. Both the UE and the access network device obtain the channel environment information in the first manner, so that the channel environment information obtained by the UE and the access network device can adapt to each other. Therefore, the access network device can correctly process the first uplink signal from the UE. In such a manner, the channel environment information or a parameter of a first uplink reference signal does not need to be transmitted between the access network device and the UE, thereby reducing transmission overheads. In addition, in this disclosure, the first uplink signal is obtained based on output information of a plurality of encoder models. For example, one encoder model corresponds to one communication scenario. If the first uplink signal is obtained based on output information of two encoder models, the first uplink signal may correspond to a third communication scenario. If the first uplink signal is obtained based on output information of more encoder models, the first uplink signal may correspond to a more complex communication scenario. This is equivalent to that in this disclosure, there is no need to train too many encoder models, but an encoder model that is more adaptive to a real communication scenario may be simulated by using a current encoder model, so that the encoder model trained in a discrete scenario can also be applicable to diversified communication scenarios, thereby implementing adaptive optimization of an uplink signal for a communication scenario. In this way, training overheads are reduced, and the first uplink signal can adapt to a changeable communication environment.

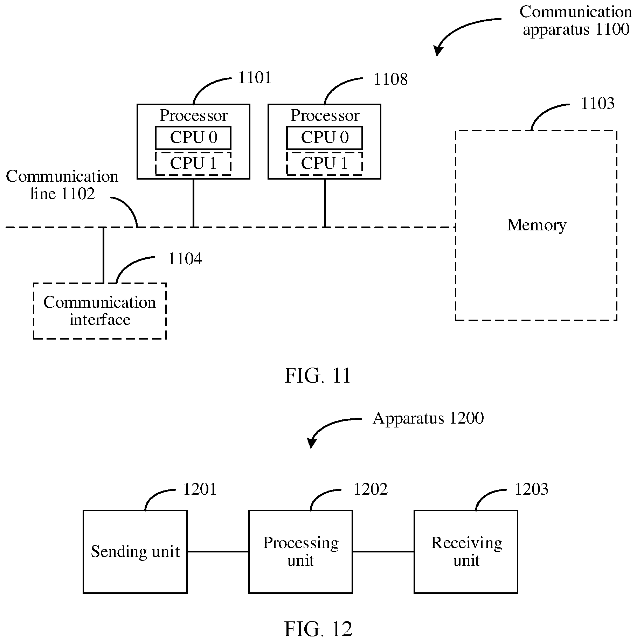

FIG. 11 is a diagram of a structure of a communication apparatus according to this disclosure. The communication apparatus 1100 may be the UE or the circuit system of the UE described in the embodiment shown in FIG. 4 or the embodiment shown in FIG. 9, and is configured to implement the method corresponding to the UE in the foregoing method embodiments. Alternatively, the communication apparatus 1100 may be the access network device or the circuit system of the access network device described in the embodiment shown in FIG. 4 or the embodiment shown in FIG. 9, and is configured to implement the method corresponding to the access network device in the foregoing method embodiments. For a specific function, refer to the descriptions in the foregoing method embodiments. For example, a circuit system is a chip system.

The communication apparatus 1100 includes at least one processor 1101. The processor 1101 may be configured for internal processing of the apparatus to implement a control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. Because the memory 1103, the communication line 1102, and the communication interface 1104 are all optional, they are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 1100 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application-specific integrated circuit (application-specific integrated circuit, ASIC), or one or more integrated circuits configured to control program execution for the solutions of this disclosure.

The communication line 1102 may include a channel for transmitting information between the foregoing components.

The communication interface 1104 is configured to communicate, by using any apparatus such as a transceiver, with another device or a communication network, for example, an Ethernet network, a radio access network (radio access network, RAN), a wireless local area network (wireless local area networks, WLAN), or a wired access network.

The memory 1103 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, an optical disk storage (including a compact optical disc, a laser disc, an optical disc, a digital versatile optical disc, a Blu-ray disc, and the like), a magnetic disk storage medium or another magnetic storage device, or any other medium capable of carrying or storing desired program code in a form of instructions or a data structure and capable of being accessed by a computer, but the memory is not limited thereto. The memory 1103 may exist independently, and is connected to the processor 1101 through the communication line 1102. Alternatively, the memory 1103 may be integrated with the processor 1101.

The memory 1103 is configured to store computer-executable instructions for executing the solutions of this disclosure, and the processor 1101 controls execution. The processor 1101 is configured to execute the computer-executable instructions stored in the memory 1103 to implement the uplink signal sending and receiving method provided in the foregoing embodiments of this disclosure.

Optionally, the computer-executable instructions in this disclosure may also be referred to as application program code. This is not specifically limited in this disclosure.

During specific implementation, in an embodiment, the processor 1101 may include one or more CPUs, for example, a CPU 0 and a CPU 1 in FIG. 11.

During specific implementation, in an embodiment, the communication apparatus 1100 may include a plurality of processors, for example, the processor 1101 and a processor 1108 in FIG. 11. Each of the processors may be a single-core (single-CPU) processor or a multi-core (multi-CPU) processor. The processor herein may be one or more devices, circuits, and/or processing cores configured to process data (for example, computer program instructions).

When the apparatus shown in FIG. 11 is a chip, for example, a chip of UE or a chip of an access network device, the chip includes the processor 1101 (and may further include the processor 1108), the communication line 1102, the memory 1103, and the communication interface 1104. Specifically, the communication interface 1104 may be an input interface, a pin, a circuit, or the like. The memory 1103 may be a register, a cache, or the like. The processor 1101 and the processor 1108 each may be a general-purpose CPU, a microprocessor, an ASIC, or one or more integrated circuits configured to control program execution of the uplink signal sending and receiving method according to any one of the foregoing embodiments.

In this disclosure, functional modules in the apparatus may be obtained through division based on the foregoing method examples. For example, the functional modules may be obtained through division in correspondence to functions, or two or more functions may be integrated in one processing module. The integrated module may be implemented in a form of hardware, or may be implemented in a form of a software functional module. It should be noted that the module division in this disclosure is an example, and is merely logical function division. During actual implementation, another division manner may be used. For example, when the functional modules are obtained through division based on corresponding functions, FIG. 12 is a diagram of an apparatus. The apparatus 1200 may be the UE or the access network device in the foregoing method embodiments, or a chip in the UE or a chip in the access network device. The apparatus 1200 includes a sending unit 1201, a processing unit 1202, and a receiving unit 1203.

It should be understood that the apparatus 1200 may be configured to implement a step performed by the UE or the access network device in the methods in this disclosure. For a related feature, refer to the foregoing embodiments. Details are not described herein again.

Specifically, functions/implementation processes of the sending unit 1201, the receiving unit 1203, and the processing unit 1202 in FIG. 12 may be implemented by the processor 1101 in FIG. 11 by invoking the computer-executable instructions stored in the memory 1103. Alternatively, a function/an implementation process of the processing unit 1202 in FIG. 12 may be implemented by the processor 1101 in FIG. 11 by invoking the computer-executable instructions stored in the memory 1103; and functions/implementation processes of the sending unit 1201 and the receiving unit 1203 in FIG. 12 may be implemented by the communication interface 1104 in FIG. 11.

Optionally, when the apparatus 1200 is a chip or a circuit, functions/implementation processes of the sending unit 1201 and the receiving unit 1203 may alternatively be implemented by a pin, a circuit, or the like.

This disclosure further provides a computer-readable storage medium. The computer-readable storage medium stores a computer program or instructions. When the computer program or the instructions are run, the method performed by the UE or the access network device in the foregoing method embodiments is implemented. In this way, the functions in the foregoing embodiments may be implemented in a form of a software functional unit and sold or used as an independent product. Based on such an understanding, the technical solutions of this disclosure essentially, or the contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this disclosure. The storage medium includes various media that can store program code, such as a USB flash drive, a removable hard disk, a ROM, a RAM, a magnetic disk, or an optical disc.

This disclosure further provides a computer program product. The computer program product includes computer program code. When the computer program code is run on a computer, the computer is enabled to perform the method performed by the UE or the access network device in any one of the foregoing method embodiments.

This disclosure further provides a processing apparatus, including a processor and an interface. The processor is configured to perform the method performed by the UE or the access network device in any one of the foregoing method embodiments.

All or some of the foregoing embodiments may be implemented by using software, hardware, firmware, or any combination thereof. When implemented by using software, all or some of the foregoing embodiments may be implemented in a form of a computer program product. The computer program product includes one or more computer instructions. When the computer program instructions are loaded and executed on a computer, the procedure or functions according to this disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one network site, computer, server, or data center to another network site, computer, server, or data center in a wired (such as a coaxial cable, an optical fiber, or a digital subscriber line (DSL)) or wireless (such as infrared, wireless, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in this disclosure may implement or operate a described function by using a design of a general-purpose processor, a digital signal processor (digital signal processor, DSP), an application-specific integrated circuit (application-specific integrated circuit, ASIC), a field-programmable gate array (field-programmable gate array, FPGA), another programmable logic apparatus, discrete gate or transistor logic, or a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors combined with one digital signal processor core, or any other similar configuration.

Steps of the methods or algorithms described in this disclosure may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or a storage medium of any other form in the art. For example, the storage medium may be connected to a processor, so that the processor can read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may alternatively be disposed in different components in the terminal device.

These computer program instructions may be loaded onto a computer or another programmable data processing device, so that a series of operations and steps are performed on the computer or the another programmable device. In this way, instructions executed on the computer or the another programmable device provide a step used to implement a specified function in one or more procedures in a flowchart and/or in one or more blocks in a block diagram.

Although this disclosure is described with reference to specific features and embodiments thereof, it is clear that various modifications and combinations may be made to this disclosure without departing from the scope of this disclosure. Correspondingly, this disclosure and the accompanying drawings are merely example descriptions of this disclosure defined by the appended claims, and are intended to cover any of or all modifications, variations, combinations, or equivalents within the scope of this disclosure. It is clearly that a person skilled in the art can make various modifications and variations to this disclosure without departing from the scope of this disclosure. This disclosure is intended to cover these modifications and variations of this disclosure provided that they fall within the scope of the claims of this disclosure and their equivalent technologies.

**Claims**

1. An uplink signal sending method, applied to a terminal device or a chip disposed in a terminal device, wherein the method comprises:

   obtaining a first manner, wherein the first manner indicates a first downlink reference signal that is among received downlink reference signals and that is used to obtain first channel environment information, the first channel environment information is used as an input of a first artificial intelligence AI model, and the first channel environment information is current channel environment information; and
   sending a first uplink signal, wherein an output of the first AI model is used to send the first uplink signal.

2. The method according to claim 1, wherein the obtaining a first manner comprises:
   receiving information indicating the first manner.

3. The method according to claim 2, wherein the information indicating the first manner indicates one or more of duration, a start time, or an end time of a first time window, and the first manner is all or some downlink reference signals received in the first time window.

4. The method according to claim 3, wherein the information indicating the first manner indicates the duration of the first time window, and the end time of the first time window is a time at which the terminal device sends the first uplink signal, or the start time or the end time of the first time window is a time at which the terminal device receives information used to schedule the first uplink signal.

5. The method according to claim 2, wherein

   the information indicating the first manner indicates a quantity N of first downlink reference signals, the first manner is the N first downlink reference signals received before a second reference time, and N is a positive integer; or
   the information indicating the first manner indicates a quantity P of pieces of CSI feedback information for the first downlink reference signal, the first manner is the P pieces of CSI feedback information sent before a second reference time, and P is a positive integer; or
   the information indicating the first manner indicates a quantity P of second uplink reference signals that use a same spatial filtering parameter or a same spatial filter as the first downlink reference signal, the first manner is the P second uplink reference signals sent before a second reference time, and P is a positive integer.

6. The method according to claim 5, wherein the second reference time is a time at which the terminal device sends the first uplink signal or a time at which the terminal device receives information used to schedule the first uplink signal.

7. The method according to any one of claims 1 to 6, wherein the output of the first AI model comprises a first parameter, the first parameter comprises one or more of the following: a parameter indicating a distribution status of a first uplink reference signal in a first resource or a parameter indicating a power allocation ratio of a first uplink reference signal in a first resource, the first resource is used to send the first uplink signal, and the first uplink reference signal is used to demodulate the first uplink signal.

8. The method according to claim 7, wherein the first uplink reference signal is a demodulation reference signal DMRS, and the first uplink signal comprises one or more of a control signal or a service signal, and comprises the first uplink reference signal.

9. The method according to any one of claims 1 to 6, wherein the output of the first AI model comprises a first parameter, the first parameter indicates a first weight value corresponding to at least one encoder model, the at least one encoder model is configured to encode the first uplink signal to obtain a respective corresponding first encoding result, and the first weight value is used to weight the first encoding result output by the at least one encoder model.

10. The method according to claim 9, wherein the first uplink signal comprises a measurement report for the first downlink reference signal, and the at least one encoder model is configured to compress the measurement report.

11. The method according to any one of claims 1 to 10, wherein the first downlink reference signal is a channel state information reference signal CSI-RS.

12. The method according to any one of claims 1 to 11, wherein the first manner further indicates an access network device to determine CSI feedback information that is among channel state information CSI feedback information received by the access network device for the first downlink reference signal and that is used to obtain second channel environment information, the second channel environment information is used as an input of a second artificial intelligence AI model, the CSI feedback information corresponds to all or some first downlink reference signals, and an output of the second AI model is used to receive the first uplink signal.

13. The method according to any one of claims 1 to 11, wherein the first manner further indicates an access network device to determine a second uplink reference signal that is among uplink reference signals received by the access network device and that is used to obtain second channel environment information, the second channel environment information is used as an input of a second artificial intelligence AI model, the second uplink reference signal is sent and all or some first downlink reference signals are received by using spatial filters with a same spatial filtering parameter or a same spatial filter, and an output of the second AI model is used to receive the first uplink signal.

14. The method according to claim 12 or 13, wherein a function of the output of the second AI model is the same as a function of the output of the first AI model, or the second AI model outputs a result obtained after processing of the first uplink signal, and a function of a second parameter used for the processing is the same as a function of the output of the first AI model.

15. The method according to any one of claims 1 to 14, wherein the first channel environment information comprises one or more of information about a downlink channel, change information of a downlink channel in time domain and/or frequency domain, or receive power information of the first downlink reference signal.

16. The method according to any one of claims 1 to 15, further comprising:

    receiving the first downlink reference signal, and obtaining the first channel environment information based on the first downlink reference signal, wherein
    the obtaining the first channel environment information based on the first downlink reference signal comprises: extracting the first channel environment information from the first downlink reference signal; or measuring the first downlink reference signal to generate a first measurement report, and extracting the first channel environment information from the first measurement report.

17. The method according to claim 16, wherein the obtaining the first channel environment information based on the first downlink reference signal further comprises:

    obtaining a plurality of pieces of sub information based on the first downlink reference signal, wherein each piece of sub information is channel environment information; and
    obtaining the first channel environment information based on the plurality of pieces of sub information, wherein the first channel environment information is a function of the plurality of pieces of sub information.

18. The method according to claim 17, wherein that the first channel environment information is a function of the plurality of pieces of sub information comprises:
    the first channel environment information is a result obtained by splicing the plurality of pieces of sub information, the first channel environment information is a result obtained by performing weighted combination processing on the plurality of pieces of sub information, or the first channel environment information is a result obtained by performing averaging processing on the plurality of pieces of sub information.

19. An uplink signal receiving method, applied to an access network device or a chip disposed in an access network device, wherein the method comprises:

    obtaining a first manner, wherein the first manner indicates second information that is among received information and that is used to obtain second channel environment information, and the second channel environment information is used as an input of a second artificial intelligence AI model;
    receiving a first uplink signal; and
    obtaining recovery information of the first uplink signal based on an output of the second AI model.

20. The method according to claim 19, wherein the second information that is among the received information and that is used to obtain the second channel environment information comprises:

second CSI feedback information that is among received CSI feedback information for a downlink reference signal and that is used to obtain the second channel environment information, wherein the second CSI feedback information corresponds to all or some first downlink reference signals; or

a second uplink reference signal that is among received uplink reference signals and that is used to obtain the second channel environment information, wherein the access network device indicates a terminal device to use spatial filters with a same spatial filtering parameter or a same spatial filter for the second uplink reference signal and all or some first downlink reference signals.

21. The method according to claim 20, further comprising:
determining information indicating the first manner, wherein the information indicating the first manner indicates one or more of duration, a start time, or an end time of a first time window, and the first manner is the second information corresponding to the first downlink reference signal sent in the first time window.

22. The method according to claim 21, wherein

the information indicating the first manner indicates the duration of the first time window, and the end time of the first time window is a time at which the access network device receives the first uplink signal; or
the start time or the end time of the first time window is a time at which the access network device sends information used to schedule the first uplink signal.

23. The method according to claim 20, further comprising:

determining information indicating the first manner, wherein the information indicating the first manner indicates a quantity N of sent first downlink reference signals, the first manner is M pieces of second information corresponding to the N first downlink reference signals sent before a second reference time, N and M are positive integers, and M is less than or equal to N, wherein
the second information is the second CSI feedback information or the second uplink reference signal.

24. The method according to claim 20, further comprising:
determining information indicating the first manner, wherein the information indicating the first manner indicates a quantity P of pieces of received second information, the first manner is the P pieces of second information received before a second reference time, P is a positive integer, and the second information is the second CSI feedback information or the second uplink reference signal.

25. The method according to claim 23 or 24, wherein the second reference time is a sending time of the first uplink signal or a sending time of information used to schedule the first uplink signal.

26. The method according to any one of claims 19 to 25, wherein the obtaining recovery information of the first uplink signal based on an output of the second AI model comprises:

when the output of the second AI model comprises a second parameter, the second parameter comprises one or more of the following: a parameter indicating a distribution status of a first uplink reference signal in a first resource or a parameter indicating a power allocation ratio of a first uplink reference signal in a first resource, the first resource is used to receive the first uplink signal, and the first uplink reference signal is used to demodulate the first uplink signal, obtaining the recovery information of the first uplink signal based on the second parameter; or
when the output of the second AI model comprises the recovery information of the first uplink signal, the second AI model processes the first uplink signal based on a second parameter, the second parameter comprises one or more of the following: a parameter indicating a distribution status of a first uplink reference signal in a first resource or a parameter indicating a power allocation ratio of the first uplink reference signal in a first resource, the first resource is used to receive the first uplink signal, and the first uplink reference signal is used to demodulate the first uplink signal, directly obtaining the recovery information of the first uplink signal based on the output of the second AI model.

27. The method according to claim 26, wherein the first uplink reference signal is a DMRS, and the first uplink signal comprises one or more of a control signal or a service signal, and comprises the first uplink reference signal.

28. The method according to any one of claims 19 to 25, wherein the obtaining recovery information of the first uplink signal based on an output of the second AI model comprises:

when the output of the second AI model comprises a second parameter, the second parameter indicates a second weight value corresponding to at least one decoder model, and the at least one decoder model is configured to decode the first uplink signal to obtain a respective corresponding second decoding result, obtaining the recovery information of the first uplink signal based on the second parameter and the second decoding result; or

when the output of the second AI model comprises at least one processing bit, obtaining the recovery information of the first uplink signal based on the at least one processing bit and at least one decoder model, wherein the second AI model processes the first uplink signal based on a second parameter, the second parameter indicates a second weight value corresponding to the at least one decoder model, and the at least one decoder model is configured to decode the at least one processing bit to obtain a respective corresponding second decoding result.

29. The method according to claim 28, wherein the first uplink signal comprises a measurement report for the first downlink reference signal, and the at least one decoder model is configured to decompress the measurement report.

30. The method according to any one of claims 19 to 29, wherein the second information is related to the first downlink reference signal, the first manner further indicates the first downlink reference signal that is among sent downlink reference signals and that is used to obtain first channel environment information, the first channel environment information is used as an input of a first AI model of the terminal device, and an output of the first AI model is used to send the first uplink signal.

31. The method according to claim 30, wherein

a function of the output of the first AI model or a first parameter that is applied to the first AI model and that is used to process the to-be-sent first uplink signal is the same as a function of the output of the second AI model; or
a function of the output of the first AI model or a first parameter that is applied to the first AI model and that is used to process the to-be-sent first uplink signal is the same as a function of the second parameter that is applied to the second AI model and that is used to process the received first uplink signal.

32. The method according to claim 30 or 31, further comprising:
sending the information indicating the first manner.

33. The method according to any one of claims 19 to 32, wherein the first manner is preset.

34. The method according to any one of claims 19 to 33, wherein the first downlink reference signal is one or more of a CSI-RS or an SSB.

35. The method according to any one of claims 19 to 34, wherein the second channel environment information comprises one or more of information about a downlink channel, change information of a downlink channel in time domain and/or frequency domain, or receive power information of the first downlink reference signal.

36. The method according to any one of claims 19 to 35, further comprising:

sending the first downlink reference signal; and
obtaining the second information from received information based on the first manner, and obtaining the second channel environment information based on the second information, wherein the second information is second CSI feedback information, and the second CSI feedback information corresponds to all or some first downlink reference signals, or the second information is the second uplink reference signal, and the access network device indicates the terminal device to use spatial filters with a same spatial filtering parameter or a same spatial filter for the second uplink reference signal and all or some first downlink reference signals.

37. The method according to claim 36, wherein the obtaining the second channel environment information based on the second information comprises:

obtaining a plurality of pieces of sub information based on the second information, wherein each piece of sub information is channel environment information; and
obtaining the second channel environment information based on the plurality of pieces of sub information, wherein the second channel environment information is a function of the plurality of pieces of sub information.

38. The method according to claim 37, wherein that the second channel environment information is a function of the plurality of pieces of sub information comprises:

the second channel environment information is a result obtained by splicing the plurality of pieces of sub information; or

the second channel environment information is a result obtained by performing weighted combination processing on the plurality of pieces of sub information, or the second channel environment information is a result obtained by performing averaging processing on the plurality of pieces of sub information.

39. An uplink signal sending method, applied to a terminal device or a chip disposed in a terminal device, wherein the method comprises:

obtaining first channel environment information based on a first downlink reference signal, wherein the first downlink reference signal is obtained based on a first manner, and the first manner is used by the terminal device and an access network device to obtain channel environment information; and

inputting the first channel environment information into a first AI model to obtain first information, and sending a first uplink signal to the access network device based on the first information.

40. The method according to claim 39, wherein the first channel environment information comprises information about a downlink channel, change information of a downlink channel in time domain and/or frequency domain, or receive power information of the first downlink reference signal.

41. The method according to claim 39 or 40, wherein the obtaining first channel environment information based on a first downlink reference signal comprises:

receiving the first downlink reference signal; and

extracting the first channel environment information from the first downlink reference signal; or measuring the first downlink reference signal to generate a measurement report, and extracting the first channel environment information from the measurement report.

42. The method according to any one of claims 39 to 41, wherein the obtaining first channel environment information based on a first downlink reference signal comprises:

receiving the first downlink reference signal;

obtaining a plurality of pieces of sub information based on the first downlink reference signal, wherein each piece of sub information is channel environment information; and

splicing the plurality of pieces of sub information to obtain the first channel environment information, performing weighted combination processing on the plurality of pieces of sub information to obtain the first channel environment information, or performing averaging processing on the plurality of pieces of sub information to obtain the first channel environment information.

43. The method according to any one of claims 39 to 42, wherein the first downlink reference signal comprises all or some downlink reference signals received in a first time window specified in the first manner, a reference time of the first time window is a time at which the terminal device sends the first uplink signal or a time at which the terminal device receives information used to schedule the first uplink signal, and the reference time of the first time window is a start time or an end time of the first time window.

44. The method according to any one of claims 39 to 42, wherein

the first downlink reference signal comprises N downlink reference signals received before a reference time specified in the first manner; or

the first downlink reference signal comprises N downlink reference signals corresponding to M measurement reports sent before a reference time specified in the first manner; and

the reference time is a time at which the terminal device sends the first uplink signal or a time at which the terminal device receives information used to schedule the first uplink signal, N and M are positive integers, and M is less than or equal to N.

45. The method according to any one of claims 39 to 44, further comprising:
receiving information about the first AI model.

46. The method according to any one of claims 39 to 45, wherein the first information comprises a first parameter, the first parameter is used to send the first uplink signal, and the first uplink signal comprises one or more of a control signal or a service signal, and comprises a first uplink reference signal.

47. The method according to claim 46, wherein

the first parameter indicates a distribution status of the first uplink reference signal in a first resource; or
the first parameter indicates a power allocation ratio of the first uplink reference signal in a first resource.

48. The method according to claim 47, wherein the first uplink reference signal is a DMRS.

49. The method according to any one of claims 39 to 45, wherein the first information comprises a first parameter, the first parameter indicates a first weight value corresponding to at least one encoder model, and the first uplink signal comprises one or more of a control signal or a service signal.

50. The method according to claim 49, wherein the first uplink signal is CSI or PMI.

51. The method according to claim 49 or 50, further comprising:
receiving information about the at least one encoder model.

52. An uplink signal receiving method, applied to an access network device or a chip disposed in an access network device, wherein the method comprises:

obtaining second channel environment information based on second information, and receiving a first uplink signal from a terminal device, wherein the second information is obtained based on a first manner, and the first manner is used by the terminal device and the access network device to obtain channel environment information; and
obtaining recovery information of the first uplink signal based on the second channel environment information and the first uplink signal.

53. The method according to claim 52, wherein the second channel environment information comprises information about a downlink channel, change information of a downlink channel in time domain and/or frequency domain, or receive power information of a first downlink reference signal.

54. The method according to claim 52 or 53, wherein the obtaining second channel environment information based on second information comprises:

receiving a measurement report of the first downlink reference signal; and
extracting the second channel environment information from the measurement report.

55. The method according to claim 52 or 53, wherein the obtaining second channel environment information based on second information comprises:

receiving a second uplink reference signal; and
if the second uplink reference signal and the first downlink reference signal use spatial filters with a same spatial filtering parameter or a same spatial filter, obtaining the second channel environment information based on the second uplink reference signal.

56. The method according to claim 55, wherein the second uplink reference signal is an SRS.

57. The method according to any one of claims 54 to 56, wherein the first downlink reference signal comprises all or some downlink reference signals sent in a first time window specified in the first manner, a reference time of the first time window is a time at which the access network device receives the measurement report of the first downlink reference signal or a time at which the access network device sends information used to schedule the first uplink signal, and the reference time of the first time window is a start time or an end time of the first time window.

58. The method according to any one of claims 54 to 56, wherein

the first downlink reference signal comprises N downlink reference signals sent before a reference time specified in the first manner; or

the first downlink reference signal comprises N downlink reference signals corresponding to M measurement reports received before a reference time specified in the first manner; or

the first downlink reference signal comprises downlink reference signals corresponding to P second uplink reference signals received before a reference time specified in the first manner; and

the reference time is a time at which the access network device receives the first uplink signal or a time at which the access network device sends information used to schedule the first uplink signal, N, M, and P are positive integers, and M is less than or equal to N.

59. The method according to any one of claims 52 to 58, wherein the obtaining recovery information of the first uplink signal based on the second channel environment information and the first uplink signal comprises:

inputting the second channel environment information and information about the first uplink signal into a second AI model to obtain the recovery information of the first uplink signal; or

inputting the second channel environment information into a second AI model to obtain a second parameter, and recovering the first uplink signal based on the second parameter to obtain the recovery information of the first uplink signal.

60. The method according to claim 59, wherein the first uplink signal comprises one or more of a control signal or a service signal, and comprises a first uplink reference signal.

61. The method according to claim 59 or 60, wherein

the second parameter indicates a distribution status of the first uplink reference signal in a first resource; or
the second parameter indicates a power allocation ratio of the first uplink reference signal in a first resource; and
the first resource is a resource used to transmit the first uplink signal.

62. The method according to claim 61, wherein the first uplink reference signal is a DMRS.

63. The method according to claim 59, wherein the first uplink signal is obtained based on a first weight value corresponding to at least one encoder model and output information of the at least one encoder model.

64. The method according to claim 59, 60, or 63, wherein the recovering the first uplink signal based on the second parameter to obtain the recovery information of the first uplink signal comprises:

processing the first uplink signal based on the second parameter to obtain at least one processing bit; and
inputting the at least one processing bit into at least one decoder model to obtain the recovery information of the first uplink signal, wherein the at least one decoder model corresponds to the at least one encoder model.

65. The method according to claim 63 or 64, wherein the second parameter indicates a second weight value corresponding to the at least one encoder model.

66. The method according to claim 65, further comprising:
sending information about the at least one encoder model to the terminal device.

67. The method according to any one of claims 59, 60, and 63 to 66, wherein the first uplink signal is CSI.

68. The method according to any one of claims 59 to 67, further comprising:
sending information about a first AI model to the terminal device, wherein the first AI model corresponds to the second AI model.

69. The method according to any one of claims 59 to 68, further comprising:

receiving the information about the first AI model and information about the second AI model, wherein the first AI model corresponds to the second AI model; or
obtaining the corresponding first AI model and the second AI model through joint training.

70. A communication apparatus, comprising a processor and a memory, wherein the memory is coupled to the processor, and the processor is configured to perform the method according to any one of claims 1 to 18, the method according to any one of claims 19 to 38, the method according to any one of claims 39 to 51, or the method according to any one of claims 52 to 69.

71. A computer-readable storage medium, wherein the computer-readable storage medium is configured to store a computer program, and when the computer program is run on a computer, the computer is enabled to perform the method according to any one of claims 1 to 18, the computer is enabled to perform the method according to any one of claims 19 to 38, the computer is enabled to perform the method according to any one of claims 39 to 51, or the computer is enabled to perform the method according to any one of claims 52 to 69.

72. A chip system, comprising:
a processor and an interface, wherein the processor is configured to invoke instructions from the interface and run the instructions, and when the processor executes the instructions, the method according to any one of claims 1 to 18, the method according to any one of claims 19 to 38, the method according to any one of claims 39 to 51, or the method according to any one of claims 52 to 69 is implemented.

73. A computer program product, wherein the computer program product comprises a computer program, and when the computer program is run on a computer, the computer is enabled to perform the method according to any one of claims 1 to 18, the computer is enabled to perform the method according to any one of claims 19 to 38, the computer is enabled to perform the method according to any one of claims 39 to 51, or the computer is enabled to perform the method according to any one of claims 52 to 69.

FIG. 1

Network device

Terminal
device

FIG. 2

FIG. 3A

FIG. 3B

FIG. 3C

FIG. 3D

FIG. 3E

| UE | | Access network device |
|---|---|---|

S401: Downlink reference signal

S403: Obtain a first manner

S402: Obtain first channel environment information based on a first downlink reference signal

S404: Input the first channel environment information into a first AI model to obtain a first parameter

S405: First uplink signal (sent based on the first parameter)

S407: Obtain the first manner

S406: Obtain second channel environment information based on second information

S408: Obtain recovery information of the first uplink signal based on the second channel environment information and the first uplink signal

FIG. 4

FIG. 5A

FIG. 5B

FIG. 5C

FIG. 6

FIG. 7

EP 4 492 901 A1

Measuring a CSI-RS, generating CSI feedback information, and extracting first channel environment information from the CSI feedback information

There is a matching relationship between the first channel environment information and the second channel environment information

Extracting second channel environment information from the received CSI feedback information

UE

First AI model

Reference signal pattern matrix

Resource mapping

Radio channel

Access network device

Second AI model

Decoded bit

Data bit

Encoding and modulation

FIG. 8

UE

Access network device

S901: Downlink reference signal

S903: Obtain a first manner

S902: Obtain first channel environment information based on a first downlink reference signal

S904: Input the first channel environment information into a first AI model to obtain a first weight value of at least one encoder model

S905: First uplink signal (based on the first weight value)

S907: Obtain the first manner

S906: Obtain second channel environment information based on second information

S908: Obtain recovery information of the first uplink signal based on the second channel environment information and the first uplink signal

FIG. 9

FIG. 10

Communication
apparatus 1100

1101          1108          1103

Processor     Processor          Memory
CPU 0         CPU 0
CPU 1         CPU 1

Communication
line 1102

1104

Communication
interface

FIG. 11

Apparatus 1200

1201          1202          1203

Sending unit  Processing    Receiving
              unit          unit

FIG. 12

## INTERNATIONAL SEARCH REPORT

| International application No. |
| --- |
| **PCT/CN2023/087483** |

**A. CLASSIFICATION OF SUBJECT MATTER**

H04W72/12(2023.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT, ENTXTC, 3GPP: 上行, 下行, 基站, 人工智能, AI, 信道, 环境, 时间, CSI, 功率, DMRS, 权值, 权重, 分布, 解码, 模型, 时域, 频域, 恢复, 还原, upstream, downstream, base station, artificial intelligence, channel, environment, time, power, weights, distribution, decod+, model, time domain, frequency domain, uplink, recovery, recovered signal

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022056759 A1 (QUALCOMM INC. et al.) 24 March 2022 (2022-03-24) description, paragraphs 6, 11,37, 64-72, 75, 77, 82, 84, and claims 32-33 | 1-27, 30-62, 67-73 |
| A | CN 112242871 A (ALCATEL-LUCENT SHANGHAI BELL CO., LTD. et al.) 19 January 2021 (2021-01-19) entire document | 1-73 |
| A | US 2011217985 A1 (QUALCOMM INC.) 08 September 2011 (2011-09-08) entire document | 1-73 |
| A | US 2021027168 A1 (SAMSUNG ELECTRONICS CO., LTD.) 28 January 2021 (2021-01-28) entire document | 1-73 |
| A | LG ELECTRONICS, INC. "R1-030581 "Multi-Stream Beamforming (MSB) MIMO System"" *3GPP TSG RAN WG1#32*, No. TSGR1_32, 23 May 2003 (2003-05-23), entire document | 1-73 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 May 2023** | **08 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/087483**

| Patent document cited in search report | | | Publication date (day/month/year) | Patent family member(s) | | | Publication date (day/month/year) |
|---|---|---|---|---|---|---|---|
| WO | 2022056759 | A1 | 24 March 2022 | None | | | |
| CN | 112242871 | A | 19 January 2021 | None | | | |
| US | 2011217985 | A1 | 08 September 2011 | WO | 2011038410 | A1 | 31 March 2011 |
| | | | | TW | 201141252 | A | 16 November 2011 |
| US | 2021027168 | A1 | 28 January 2021 | EP | 3918536 | A1 | 08 December 2021 |
| | | | | WO | 2021015403 | A1 | 28 January 2021 |
| | | | | KR | 20210011844 | A | 02 February 2021 |
| | | | | CN | 113906447 | A | 07 January 2022 |

Form PCT/ISA/210 (patent family annex) (July 2022)

# EP 4 492 901 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210388336